(19) Europäisches Patentamt
European Patent Office
Office européen des brevets

(11) EP 1 169 667 B1

(12) **EUROPÄISCHE PATENTSCHRIFT**

(45) Veröffentlichungstag und Bekanntmachung des Hinweises auf die Patenterteilung:
**30.10.2002 Patentblatt 2002/44**

(21) Anmeldenummer: **00906259.7**

(22) Anmeldetag: **01.02.2000**

(51) Int Cl.[7]: **G02F 1/153**

(86) Internationale Anmeldenummer:
**PCT/EP00/00782**

(87) Internationale Veröffentlichungsnummer:
**WO 00/048040 (17.08.2000 Gazette 2000/33)**

(54) **ELEKTROCHROME VORRICHTUNG MIT NANOTEILCHEN UND UV-ABSORBER IN DER SCHUTZSCHICHT**

ELECTROCHROMIC DEVICE WITH NANOPARTICLES AND UV-ABSORBERS IN THE PROTECTIVE COATING

DISPOSITIF ELECTROCHROMIQUE RENFERMANT DES NANOPARTICULES ET DES AGENTS ABSORBANT LES UV DANS LA COUCHE DE PROTECTION

(84) Benannte Vertragsstaaten:
**AT BE CH CY DE DK ES FI FR GB GR IE IT LI LU MC NL PT SE**

(30) Priorität: **12.02.1999 DE 19905797**

(43) Veröffentlichungstag der Anmeldung:
**09.01.2002 Patentblatt 2002/02**

(73) Patentinhaber: **Bayer Aktiengesellschaft**
**51368 Leverkusen (DE)**

(72) Erfinder:
- **BERNETH, Horst**
  **D-51373 Leverkusen (DE)**
- **HOHEISEL, Werner**
  **D-51061 Köln (DE)**
- **NEIGL, Ralf**
  **D-51373 Leverkusen (DE)**
- **WOMELSDORF, Herrmann**
  **D-51375 Leverkusen (DE)**

(56) Entgegenhaltungen:
**WO-A-97/45767**
**WO-A-99/32574**
**US-A- 5 280 380**
**US-A- 5 604 626**
**US-A- 5 838 483**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 169 667 B1

Printed by Jouve, 75001 PARIS (FR)

## Beschreibung

Die vorliegende Erfindung betrifft eine UV-geschützte elektrochrome Vorrichtung.

Elektrochrome Vorrichtungen sind bereits bekannt, beispielsweise aus D. Theis in Ullmann's Encyclopedia of Industrial Chemistry, Vol. A 8, S. 622, Verlag Chemie 1987 und WO-A 94/23333. Man unterscheidet zwei Grundtypen:

<u>Typ 1</u>: vollflächige elektrochrome Vorrichtung.

<u>Typ 2:</u> elektrochrome Anzeigevorrichtungen mit strukturierten Elektroden.

Typ 1 findet beispielsweise bei elektrisch abdunkelbaren Fensterscheiben oder elektrisch abblendbaren Autospiegeln Anwendung. Solche Vorrichtungen sind beispielsweise aus US-A-4 902 108 bekannt.

Typ 2 findet bei Segment- und Matrixanzeigen Verwendung. Solche Anzeigevorrichtungen sind beispielsweise in der Deutschen Patentanmeldung P 196 31 728 vorgeschlagen worden. Derartige Vorrichtungen können transmissiv oder bei Verspiegelung reflektiv betrachtet werden.

In WO-A 94/23333 werden elektrochrome Materialien verschiedener Bauweise gegenübergestellt, die aber nicht als Anzeigevorrichtungen verwendet werden:

<u>Bauweise a:</u> Die elektrochromen Substanzen liegen als Film oder Schicht fest auf den Elektroden (vgl. Ullmann, s. o.).

<u>Bauweise b:</u> Die elektrochromen Substanzen werden beim Redoxprozess auf den Elektroden als Schicht abgeschieden (vgl. Ullmann, s.o.).

<u>Bauweise c:</u> Die elektrochromen Substanzen bleiben permanent in Lösung.

Für Bauweise a) ist als elektrochromes Material das Paar Wolframoxid/Palladiumhydrid das bekannteste.

Für Bauweise b) sind Viologene als elektrochrome Substanzen beschrieben worden. Diese Vorrichtungen sind nicht selbstlöschend, das erzeugte Bild bleibt also nach dem Abschalten des Stromes bestehen und kann nur durch Umpolen der Spannung wieder gelöscht werden. Solche Vorrichtungen sind nicht besonders beständig und erlauben keine hohe Zahl an Schaltzyklen.

Zudem sind insbesondere solche mit Wolframoxid/Palladiumhydrid aufgebauten Zellen wegen der Lichtstreuung an diesen elektrochromen Schichten nicht im durchfallenden Licht zu betreiben, sondern lediglich reflektiv.

Aus Elektrokhimiya **13**, 32-37 (1977), **13,** 404-408, **14,** 319-322 (1978), US-A 4 902 108 und US-A 5 140 455 ist ein elektrochromes System dieser letztgenannten Bauweise c) bekannt. In einer elektrochromen Zelle, die aus leitfähig beschichteten Glasplatten aufgebaut ist, ist eine Lösung eines Paares elektrochromer Substanzen in einem inerten Lösungsmittel enthalten.

Als Paar von elektrochromen Substanzen wird je eine elektrochemisch reversibel reduzierbare und eine reversibel oxidierbare Substanz verwendet. Beide sind im Grundzustand farblos oder nur schwach gefärbt. Unter Einfluss einer elektrischen Spannung wird die eine Substanz reduziert, die andere oxidiert, wobei beide farbig werden. Nach Abschalten der Spannung bildet sich bei beiden Substanzen der Grundzustand wieder zurück, wobei Entfärbung bzw. Farbaufhellung auftritt.

$$\mathrm{RED_1} + \mathrm{OX_2} \rightleftarrows \mathrm{OX_1} + \mathrm{RED_2}$$

(farblos) (Niederenergiepaar) — (farbig) (Hochenergiepaar)

Aus US-A 4 902 108 ist bekannt, dass solche Paare von Redoxsubstanzen geeignet sind, bei denen die reduzierbare Substanz wenigstens zwei chemisch reversible Reduktionswellen im Cyclischen Voltammogramm und die oxidierbare Substanz entsprechend wenigstens zwei chemisch reversible Oxidationswellen besitzt.

Für solche elektrochromen Zellen der Bauweise c sind verschiedene Anwendungen beschrieben worden. So können sie beispielsweise als Automobilrückspiegel ausgebildet sein, der bei Nachtfahrt durch Anlegen einer Spannung abgedunkelt werden kann und somit das Blenden durch Scheinwerfer nachfolgender Fahrzeuge verhindert (vgl. z. B. US-A 3 280 701, US-A 4 902 108, EP-A 0 435 689). Weiterhin können solche Zellen auch in Fensterscheiben oder Auto-Sonnendächern eingesetzt werden, wo sie nach Anlegen einer Spannung das Sonnenlicht abdunkeln. Ebenfalls beschrieben ist die Anwendung solcher Vorrichtungen als elektrochrome Anzeigevorrichtungen, beispielsweise in Segment- oder Matrix-Displays mit strukturierten Elektroden (Deutsche Patentanmeldung P 196 31 728).

Die elektrochromen Zellen bestehen normalerweise aus einem Paar Glasplatten, von denen im Falle des Autospiegels eine verspiegelt ist. Eine Seite dieser Scheiben ist mit einer lichtdurchlässigen, elektrisch leitfähigen Schicht, beispielsweise Indium-Zinn-Oxid (ITO), flächig beschichtet, wobei im Falle der Anzeigevorrichtungen diese leitfähige Beschichtung in elektrisch voneinander getrennte Segmente aufgeteilt ist, die einzeln kontaktiert sind. Aus diesen Scheiben wird nun eine Zelle aufgebaut, indem sie mit ihrer einander zugewandten elektrisch leitfähig beschichteten Seite über einen Dichtungsring zu einer Zelle verbunden werden. In diese Zelle wird nun über eine Öffnung eine elektrochrome Flüssigkeit eingefüllt und die Zelle dicht verschlossen. Über die ITO-Schichten werden die beiden Scheiben mit einer Spannungsquelle verbunden.

Die vorstehend beschriebenen elektrochromen Vorrichtungen zeigen in der Regel eine Empfindlichkeit gegenüber Licht, insbesondere UV-Licht. Es sind deshalb beispielsweise in US-A 5 280 380 elektrochrome Vorrichtungen beschrieben, die UV-Absorber enthalten. Es sind auch elektrochrome Autospiegel beschrieben worden, die solche Absorber in einer Splitterschutz-Beschichtung enthalten (US-A 5 073 012).

Als UV-Lichtabsorber werden bisher meist organische Verbindungen verwendet, die in dem relevanten Wellenlängenbereich eine molekulare Absorptionsbande aufweisen und nicht im sichtbaren Spektralbereich absorbieren. Nachteilig bei diesen Verbindungen ist, dass sie in teilweise hohen Konzentrationen in der elektrochromen Lösung oder in einer Polymerschicht, die auf eine der beiden Platten aufgebracht ist, gelöst sein müssen. Häufig ist die Löslichkeit in diesen Medien aber begrenzt und folglich auch die Wirksamkeit des UV-Absorbers. Weiterhin können sie unter Lichteinwirkung ausbleichen und/oder aus dem polymeren Substrat ausdampfen oder ausgewaschen werden.

Es ist auch bekannt, dass anorganische Festkörpermaterialien UV-Licht absorbieren können.

Diese anorganischen Partikel können je nach deren Größe und Wahl des Materials Bereiche des schädlichen UV-Lichtes absorbieren und/oder streuen. Dabei ist die Absorption der Streuung von Licht vorzuziehen, da insbesondere bei einer Einarbeitung der Partikel in das zu schützende Material gestreute Photonen dieses weiterhin schädigen können. Weiter führt ein zu großer Streuanteil des Lichts zu einer Trübung des zu schützenden Materials. Aus Absorption and Scattering of Light by Small Particles, C. F. Bohren, D. R. Huffman, S. 93 bis 104 und 130 bis 141, 1983 ist bekannt, dass mit abnehmender Größe der Partikel deren Absoptionsvermögen von Licht höher ist als deren Fähigkeit, Licht zu streuen. Für einen transparenten UV-Lichtabsorber sind also nur sehr kleine Partikel geeignet. Um auch Farblosigkeit des UV-Lichtabsorbers zu gewährleisten, muss das Material der Partikel eine Absorptionskante im Wellenlängenbereich zwischen etwa 300 nm und 400 nm besitzen. Nach WO-A 93/ 06164 eignen sich für eine solche Wirkung Materialien mit einer Bandlücke zwischen 2,8 eV und 4,1 eV, was einem Wellenlängenbereich zwischen 303 nm und 445 nm entspricht. Für diesen Anwendungszweck werden aus dieser Materialklasse u.a. bereits $TiO_2$, ZnO, $CeO_2$, SiC eingesetzt, siehe beispielsweise WO-A 93/06164, WO-A 95/09895 und WO-A 92/21315.

Weitere elektrochrome Vorrichtungen, die Nanoteilchen und/oder einen UV-Absorber enthalten, sind aus US-A-5 838 483 und US-A-5 604 626 bekannt. Wenn Nanoteilchen und ein UV-Absorber vorhanden sind, befindet sich der UV-Absorber stets in der elektrochromen Lösung und nicht als Bestandteil einer Schutzschicht.

Nachteilig bei solchen Nanoteilchen, insbesondere bei solchen, die in einfachen technischen Prozessen hergestellt werden sollen, ist, dass ihre Absorptionskante nicht beliebig eingestellt werden kann. So lassen sich folglich nicht in einfacher Weise Nanoteilchen bereitstellen, die auf das Absorptionsverhalten der elektrochromen Substanzen optimal eingestellt sind.

Es bestand folglich die Aufgabe, einen UV-Schutz elektrochromer Zellen bereitzustellen, der die im Stand der Technik bekannten Nachteile nicht aufweist.

Es wurde nun gefunden, dass die oben beschriebenen elektrochromen Vorrichtungen durch eine Kombination aus anorganischen Nanopartikeln mit organischen UV-Absorbern effektiv gegen Zerstörung durch UV-Licht geschützt werden können.

Gegenstand der Erfindung ist demnach eine elektrochrome Vorrichtung, die eine Beschichtung trägt, die mindestens einen UV-Absorber und Nanoteilchen enthält.

Solche Beschichtungen bieten einen an die Eigenschaften der elektrochromen Substanzen optimal anpassbaren UV-Schutz. Die Kombination führt zu einer Verstärkung des UV-Schutzes und zu einer Verbesserung seiner Lichtbeständigkeit.

Gegenstand der Erfindung ist vorzugsweise eine elektrochrome Vorrichtung, bestehend aus einem Paar Glas- oder Kunststoffplatten oder Kunststoffolien, von denen mindestens eine Platte oder Folie, vorzugsweise beide Platten oder Folien auf jeweils einer Seite mit einer elektrisch leitfähigen Beschichtung versehen sind, von denen wenigstens eine Platte oder Folie und ihre leitfähige Beschichtung transparent sind, von denen die andere verspiegelt sein kann und von denen wenigstens bei einer der beiden Platten oder Folien die elektrisch leitfähige Schicht in getrennte, einzeln kontaktierte Flächensegmente aufgeteilt sein kann, wobei die Platten oder Folien über einen Dichtungsring auf den Seiten ihrer leitfähigen Beschichtung zusammengefügt sind, und das Volumen, gebildet aus den beiden Platten oder Folien und dem Dichtungsring, mit einem elektrochromen Medium gefüllt ist, dadurch gekennzeichnet, dass wenigstens

eine der beiden Platten oder Folien eine Beschichtung trägt, die mindestens einen UV-Absorber und Nanoteilchen enthält.

In einer besonderen Ausführungsform handelt es sich bei dem UV-Absorber um einen organischen UV-Absorber. In einer besonderen Ausführungsform handelt es sich bei den Nanoteilchen um anorganische Nanoteilchen.

Erfindungsgemäß besonders bevorzugt sind elektrochrome Vorrichtungen, in denen wenigstens eine der beiden leitfähigen Schichten mit einer elektrochromen Schicht überzogen ist, sowie elektrochrome Vorrichtungen, in denen das elektrochrome Medium eine elektrochrome Lösung darstellt, dadurch gekennzeichnet, dass die elektrochrome Vorrichtung eine Beschichtung trägt, die mindestens einen UV-Absorber und Nanoteilchen enthält.

Geeignete Nanoteilchen sind solche auf Basis SiC, AlSi, Ag, $Fe_2O_3$, $Fe_3O_4$, $TiO_2$, ZnO, GaP, $CeO_2$, ZnS, $SnO_2$, $Si_yGe_{1-y}$, $W_xMo_{1-x}O_3$, NiO, $Bi_2O_3$, $In_2O_3$, $HfO_2$, $BaTiO_3$, $CaTiO_3$, Ge, AlP, GaN, worin $0{,}7 \leq y < 1$ und $0 \leq x \leq 1$ sind.

Im Sinne der Erfindung besonders geeignete Nanoteilchen sind die aus der oben genannten Literatur und den Patentanmeldungen bekannten Materialien auf Basis Ag, $TiO_2$, ZnO, $CeO_2$, SiC, AlSi, $Fe_2O_3$, $Fe_3O_4$, $W_xMo_{1-x}O_3$, $BaTiO_3$, $CaTiC_3$ oder Mischungen davon.

Eine Trübung durch die UV-Absorber-Partikel ist für eine elektrochrome Vorrichtung nicht akzeptabel, da bei den verschiedenen genannten Anwendungsgebieten wie Autospiegel oder Anzeigevorrichtung eine hohe Transmission des Lichts sowie insbesondere eine scharfe Abbildung gefordert wird. Radikalbildende Partikel sind insbesondere dann unbrauchbar, wenn sich diese Partikel in der elektrochromen Lösung befinden. Eine Wechselwirkung mit den in der Regel radikalischen oder radikalionischen, durch Elektrodenraktion gebildeten $OX_1$ und $RED_2$ würde in das oben aufgeführte Gleichgewicht eingreifen und zu ungewünschten Farbveränderungen und/oder zu unzureichender Farblöschung nach Abschalten der Spannung führen. Besonders bevorzugt sind Nanoteilchen mit einem mittleren Durchmesser von kleiner als 500 nm, bevorzugt von kleiner als 100 nm, besonders bevorzugt von kleiner als 50 nm, ganz besonders bevorzugt von kleiner als 20 nm,

Besonders bevorzugt sind Nanoteilchen aus Silber. Sie zeigen ein Absorptionsmaximum, das durch die Wahl des umgebenden Mediums und dessen Brechungsindex $\varepsilon$ verschoben werden. Z.B. liegt das Maximum bei 395 nm bei $\varepsilon = 1.33$, bei 408 nm bei $\varepsilon = 1.45$, bei 422 nm bei $\varepsilon = 1.55$. Somit lässt sich das Absorptionsverhalten durch die Wahl der Beschichtung der elektrochromen Vorrichtung den jeweiligen Erfordernissen anpassen.

Ebenfalls besonders bevorzugt sind Nanoteilchen, die überwiegend Partikel aus Silicium und/oder aus festen Verbindungen enthalten, in denen Silicium im stöchiometrischen Überschuss vorliegt. Vorteilhaft ist ein mittlerer Durchmesser von kleiner als 120 nm. Sie verfügen über vorteilhafte Eigenschaften, wie hohe Transparenz im. sichtbaren Spektralbereich bei niedrigeren Partikelkonzentrationen, hohe Stabilität an Luft, hohe Umwelt- und Bioverträglichkeit und vollständige Abwesenheit von photokatalytischen Aktivitäten sowie das Herausfiltern von Licht im UVA- und UVB-Bereich mit hoher Effizienz.

Unter mittlerem Durchmesser ist das Maximum der Anzahlverteilung zu verstehen.

Bei elementarem Silicium handelt es sich um amorphes oder kristallines Silicium, bevorzugt um kristallines Silicium. Die Größe der Siliciumpartikel liegt vorzugsweise zwischen 1 nm und 120 nm, besonders bevorzugt zwischen 1 nm und 70 nm, ganz besonders bevorzugt zwischen 10 nm und 50 nm. Vorzugsweise weisen diese Partikel eine Größenverteilung mit einer maximalen Halbwertsbreite von 40 nm auf. Siliciumpartikel mit diesem mittleren Durchmesser werden vorzugsweise mittels Gasphasenreaktion (CVR) nach dem im US-A 5 472 477 beschriebenen Verfahren hergestellt. Ebenfalls möglich ist die Herstellung gemäß J. Phys. Chem., 97, S, 1224 bis 1230 (1973), J. Vac. Sci. Technol. A10, S. 1048 (1992) sowie Int. J. Heat Mass Transfer 31, S. 2236 (1988).

Unter den Begriff feste Verbindungen fallen bei Raumtemperatur feste Verbindungen, wie z.B. Silicide, $CaSi_2$ und/oder $BaSi_2$. Unter den Begriff Verbindungen in denen Silicium in stöchiometrischem Überschuss vorliegt, fallen vorzugsweise Verbindungen der Formel $Si_xZ_{1-x}$ mit $0{,}5 < x \leq 1$, bevorzugt $0{,}7 < x \leq 1$und Z = C, N, O, Ge, Ca, Ba und Sr. Die Anwesenheit anderer Materialien verschiebt die energetische Lage der Absorptionskante in gewissen Grenzen und modifiziert die Form der Kante. Als feste Verbindungen sind hierbei $Si_xC_{1-x}$ oder $Si_xGe_{1-x}$ bevorzugt.

Bevorzugt sind Nanoteilchen aus allen bisher beschriebenen Materialien, die kugelförmig oder nahezu kugelförmig sind. Unter nahezu kugelförmig sind beispielsweise Ellipsoide zu verstehen mit einem Achsenverhältnis von 1:4, vorzugsweise 1:2.

Ebenfalls bevorzugt sind Nanoteilchen aus allen bisher beschriebenen Materialien, die eine Kern-Hüllenstruktur aufweisen. Die Hülle kann organisch modifiziert sein.

Die Hülle besteht beispielsweise aus einem Oxid des Materials des Nanoteilchens. Sie kann aber auch aus einem anderen Material bestehen, das im Sichtbaren transparent ist und dessen Brechungsindex dem des Nanoteilchens ähnlich ist. Die Dicke einer Oxidschicht kann beispielsweise zwischen 1 und 300 nm betragen.

In einer bevorzugten Ausführungsform der Erfindung weisen die Nanoteilchen eine Kern-Hüllenstruktur auf, beispielsweise bei festen Verbindungen, in denen Silicium im stöchiometrischen Überschuss vorliegt. Bevorzugt ist dabei, dass dieser aus einem Kern aus Titannitrid und einer Hülle aus Silicium besteht, wobei der Silicium-Volumenanteil mindestens 30 % je Partikel ist.

Der mittlere Durchmesser der Partikel aller bisher beschriebenen Arten ist vorzugsweise kleiner als 120 nm,

besonders bevorzugt kleiner als 100 nm, ganz besonders bevorzugt kleiner 50 nm ist. Diese weisen vorzugsweise eine Teilchengrößenverteilung mit einer maximalen Halbwertsbreite von 40 nm, vorzugsweise 30 nm, besonders bevorzugt 20 nm, auf.

Die Herstellung der festen Verbindungen, inklusive derer mit Kern-Hüllen-Struktur kann z.B. durch eine thermische Zersetzung eines Silicium-enthaltenden Gases, wie z.B. Silanen, Organosilanen oder $SiCl_4$, durchgeführt werden, so dass ein Aerosol entsteht (siehe J. Phys. Chem., 97, S. 1224 bis 1230 (1973), J. Vac. Sci. Technol. A10, S. 1048 (1992). Durch Beimischungen weiterer Gase, die beispielsweise Germanium oder Kohlenstoff enthalten, resultieren entsprechend stöchiometrisch zusammengesetzte Verbindungen. Im Fall von festen Verbindungen mit einer Kern-Hüllen-Struktur wird zunächst der Kern mittels der zuvor beschriebenen Verfahren hergestellt und anschließend mittels Zersetzung oder Reaktion in der Gasphase entsprechend zusammengesetzter Gase, wie z.B. $SiH_4$ oder $SiCl_4$ zusammen mit $H_2$, die Hülle aufgebracht. Die thermische Zersetzung kann in einem Gasphasenreaktor, bevorzugt in einem CVR (Chemical Vapor Reaktion)-Reaktor, oder auch durch Laserabsorption (siehe Int. J. Heat Mass Transfer, 31, S. 2239 (1988) stattfinden. Die thermische Zersetzung von Gasen eignet sich besonders zur Herstellung kristalliner Partikel. Ebenfalls möglich ist die Herstellung über ein PECVD (Plasma Enhanced Chemical Vapor Deposition)-Verfahren (siehe J. Vac. Sci. Technol., A10, S. 1048 (1992)). Im letzten Verfahren entstehen amorphe Partikel, die durch eine thermische Nachbehandlung kristallinisiert werden können (siehe Nanostructured Materials, Vol. 6, S. 493 bis 496 (1995)).

Die Nanoteilchen können auch in Form von Agglomeraten vorliegen. Im Fall des Siliciums unterscheiden sich die optischen Eigenschaften der Agglomerate von denen der Primärpartikel, da sich durch die elektromagnetische Wechselwirkung der Partikel untereinander neue Absorptionskanäle bilden, die teilweise auch im sichtbaren Spektralbereich liegen.

Die Primärpartikel der Nanoteilchen können auch von einer Oxidschicht umgeben sein. Dadurch wird ein direkter Kontakt der Primärpartikel und somit deren Agglomeration verhindert. Die Dicke der Oxidschicht beträgt vorzugsweise 1 nm bis 300 nm, besonders bevorzugt 10 bis 100 nm. Vorteilhafte Oxidschichten sind solche, deren Brechungsindex im sichtbaren Spektralbereich sehr ähnliche Werte hat wie die vor der UV-Strahlung zu schützenden Medien, wie z.B.: Polycarbonat, Polyurethan, organische Lösungen wie das elektrochrome Medium. Dadurch verringert sich die lichtstreuende Wirkung und die Matrix bleibt transparent. Diese Oxidschicht kann z.B. durch Zudosierung von Sauerstoff in den CVR-Reaktor nach der Herstellung der Partikel erfolgen.

In einer bevorzugten Ausführungsform versteht man unter den Nanoteilchen eine Mischung, die zusätzlich Partikel, beispielsweise aus Oxiden und/oder Nitriden von Metallen, die im roten Spektralbereich von 600 nm $< \lambda <$ 700 nm stärker absorbieren als im blau-grünen Spektralbereich von 400 nm $< \lambda <$ 550 nm. Als solche Zusätze sind Partikel aus Titannitrid mit einem mittleren Durchmesser von 1 nm bis 400 nm, bevorzugt 10 nm bis 120 nm oder Agglomerate aus diesen Titannitrid-Primärpartikeln bevorzugt. Deren Herstellung kann z.B. gemäß US-A 5 472 477 erfolgen. In einer bevorzugten Ausführungsform enthält der UV-Lichtabsorber neben Silicium-Partikeln auch TiN-Partikel mit einem mittleren Durchmesser von 10 bis 120 nm. Diese Mischungwirkt sehr effektiv im UVA-Bereich und gewährleistet gleichzeitig eine Farbneutralität bei hoher Transparenz. Ebenfalls bevorzugt sind Zusätze in Form von Partikeln aus Aluminium-Natrium-Silikaten (Ultramarine Pigmente), z.B. erhältlich bei der Firma Nubiola S.A., unter der Bezeichnung Nubix® Pigmente. Weiterhin können sie als Zusätze Eisen(III)hexacyanoferrat(II) enthalten.

In einer weiteren Ausführungsform der Erfindung werden als Nanoteilchen vorzugsweise eine Mischung aus den Silizium enthaltenden Partikeln und aus Partikeln der folgenden Gruppe eingesetzt: Siliciumcarbid und/oder Oxiden der Metalle Titan, Cer, Wolfram, Zink, Zinn sowie Eisen. Durch solche Mischungen lässt sich die Absorptionskante insbesondere deren Steilheit manipulieren. Die Partikelgröße der zugemischten Partikel liegt vorzugsweise zwischen 1 nm und 200 nm. Auch diese sind u.a. nach dem in US-A 5 472 477 beschriebenen Verfahren erhältlich.

Als organische UV-Absorber können z. B. solche auf Basis von substituierten Benzophenonen oder Zimtsäureestern eingesetzt werden, wie sie beispielsweise aus US-A 5 280 380 und US-A 5 073 012 bekannt sind.

Bevorzugt sind solche organische UV-Absorber ausgewählt aus den Formeln

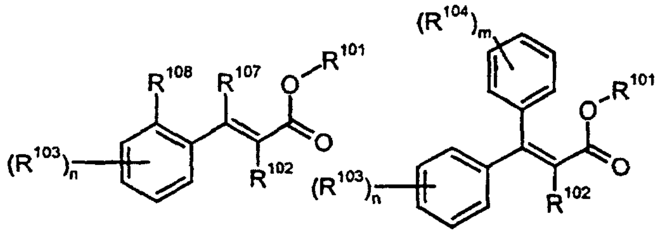

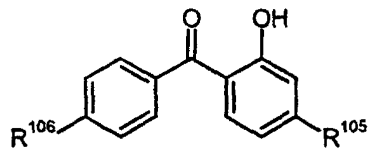

(CC), (CCI), (CCII),

enthält, worin

| | |
|---|---|
| $R^{101}$ | für gegebenenfalls verzweigtes $C_1$- bis $C_{20}$-Alkyl steht, |
| $R^{102}$ | für Wasserstoff, Cyano oder $COOR^1$ steht, |
| $R^{103}$, $R^{104}$ und $R^{106}$ | unabhängig voneinander für Wasserstoff, $C_1$- bis $C_{12}$-Alkyl oder $C_1$- bis $C_{12}$-Alkoxy stehen, |
| $R^{105}$ | für Wasserstoff, $C_1$- bis $C_{12}$-Alkyl, $C_1$- bis $C_{12}$-Alkoxy oder Hydroxy steht, |
| $R^{107}$ | für Wasserstoff oder $C_1$- bis $C_{12}$-Alkyl steht, |
| $R^{108}$ | für Wasserstoff steht oder |
| $R^{107}$ gemeinsam mit $R^{108}$ | eine $C_2$- oder $C_3$-Brücke bilden, die bis zu 3 $C_1$- bis $C_4$-Alkylreste tragen kann und |
| n und m | unabhängig voneinander für eine ganze Zahl von 1 bis 3 stehen. |

Bevorzugt sind solche UV-Absorber ausgewählt aus den Formeln (CC), (CCI) und (CCII), worin

| | |
|---|---|
| $R^{101}$ | für gegebenenfalls verzweigtes $C_1$- bis $C_{20}$-Alkyl steht, |
| $R^{102}$ | für Wasserstoff oder Cyano steht, |
| $R^{103}$, $R^{104}$ und $R^{106}$ | unabhängig voneinander für Wasserstoff oder $C_1$- bis $C_{12}$-Alkoxy stehen, |
| $R^{105}$ | für $C_1$- bis $C_{12}$-Alkoxy oder Hydroxy steht, |
| $R^{107}$ und $R^{108}$ | für Wasserstof stehen oder |
| $R^{107}$ zusammen mit $R^{108}$ | für $-(CH_2)_2-$, $-(CH_2)_3-$ oder $-CH_2-C(CH_3)_2-$ stehen und |
| n und m | unabhängig voneinander für 1 oder 2 stehen. |

Besonders bevorzugt sind solche UV-Absorber ausgewählt aus den Formeln (CC), (CCI) und (CCII), worin

| | |
|---|---|
| $R^{101}$ | für Methyl, Ethyl, 1- oder 2-Propyl, 1- oder 2-Butyl, 1-Hexyl, 2-Ethyl-1-hexyl, 1-Octyl oder 1-Dodecyl steht, |
| $R^{102}$ | für Wasserstoff oder Cyano steht, |

| | |
|---|---|
| $R^{103}$, $R^{104}$ und $R^{106}$ | unabhängig voneinander für Wasserstoff, Methoxy, Ethoxy, Propoxy, Butoxy, Hexoxy oder Octoxy stehen, |
| $R^{105}$ | für Methoxy, Ethoxy, Propoxy, Butoxy, Hexoxy, Octoxy oder Hydroxy steht, |
| $R^{107}$ und $R^{108}$ | für Wasserstoff stehen oder |
| $R^{107}$ zusammen mit $R^{108}$ | für $-CH_2-C(CH_3)_2-$ stehen und |
| n und m | unabhängig voneinander für 1 oder 2 stehen. |

Ganz besonders bevorzugt handelt es sich um einen UV-Absorber der Formel (CC), worin

| | |
|---|---|
| $R^{101}$ | für Ethyl oder 2-Ethyl-1-hexyl steht, |
| $R^{102}$ | für Wasserstoff steht und |
| $R^{103}$ | für m- und/oder p-ständiges Methoxy oder Ethoxy steht, |
| $R^{107}$ und $R^{108}$ | für Wasserstoff stehen oder |
| $R^{107}$ zusammen mit $R^{108}$ | für $-CH_2-C(CH_3)_2-$ stehen und |
| n und m | unabhängig voneinander für 1 oder 2 stehen, |

oder um einen UV-Absorber der Formel (CCI), worin

| | |
|---|---|
| $R^{101}$ | für Ethyl oder 2-Ethyl-1-hexyl steht, |
| $R^{102}$ | für Cyano steht, |
| $R^{103}$ und $R^{104}$ | für Wasserstoff stehen und |
| n und m | für 1 stehen, |

oder um einen UV-Absorber der Formel (CCII), worin

| | |
|---|---|
| $R^{105}$ | für Methoxy, Ethoxy, Octoxy oder Hydroxy steht und |
| $R^{106}$ | für Wasserstoff steht, |

oder eine Mischung der UV-Absorber der Formeln (CC) und (CCI) oder eine Mischung der UV-Absorber (CC) und (CCII) oder eine Mischung der UV-Absorber (CCI) und (CCII) oder eine Mischung der UV-Absorber (CC) und (CCI) und (CCII),
worin die Reste die oben angegebene Bedeutung besitzen.

In ganz besonderem Maße bevorzugt ist ein UV-Absorber der Formel

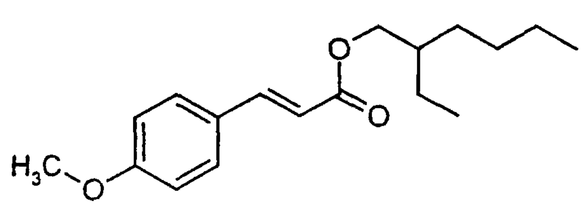

(CCIII)

oder ein UV-Absorber der Formel

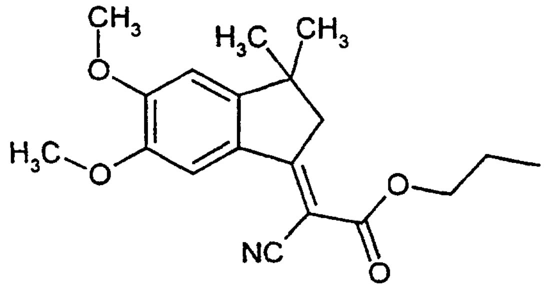

(CCIV)

oder einen UV-Absorber der Formel

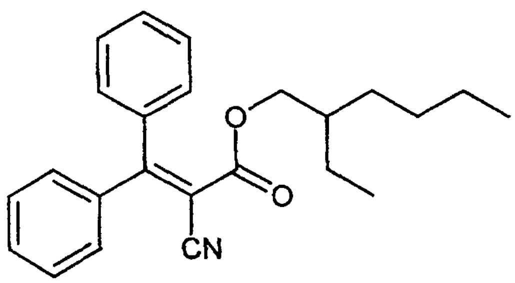

(CCV)

oder einen UV-Absorber der Formel

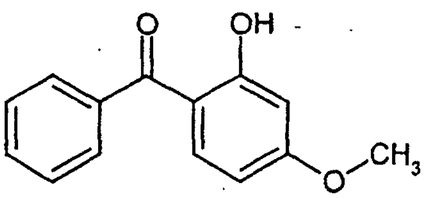

(CCVI)

oder eine Mischung der UV-Absorber der Formeln (CCIII) und (CCV) oder eine Mischung der UV-Absorber der Formeln (CCV) und (CCVI) oder eine Mischung der UV-Absorber der Formeln (CCIII) und (CCVI) oder eine Mischung der Formeln (CCIV) und (CCV) oder eine Mischung der Formeln (CCIV) und (CCVI) enthält.

Als weitere UV-Absorber kommen zur fallweisen Verstärkung des UV-Schutzes beispielsweise folgende UV-Absorber in Frage: Beispiele sind UVINUL® 3000 (2,4-Dihydroxybenzophenon, BASF), Tinuvin® 571 (2-(2H-Benzotriazol-2-yl)-6-dodecyl-4-methylphenol, Ciba), Cyasorb 24™ (2,2'-Dihydroxy-4-methoxybenzophenon, American Cyanamid Company.

Die Nanoteilchen und UV-Absorber sind in einer Beschichtung enthalten, die in der Regel auf beide Platten oder Folien der elektrochromen Vorrichtung aufgebracht sind, mindestens aber auf der dem Licht zugewandten Platte oder Folie.

Diese Beschichtungen sind in der Regel auf der Außenseite der elektrochromen Vorrichtung angebracht, d. h. auf der Seite der Platten oder Folien, die nicht leitfähig beschichtet sind.

Geeignete Beschichtungsmaterialien sind alle transparenten, auf den Platten oder Folien gut haftenden Materialien, wie Kunststoffe oder Lacke, beispielsweise Polyurethane, Polyvinylalkohol, Polyvinylacetat, Polyacrylate, Polymethacrylate, Polyester, Polyamid, Polyacrylnitril, oder entsprechende Misch- oder Copolymerisate, usw. Diese Beschichtungsmaterialien können jedoch auch Folien sein, die mittels Klebern auf die Platten oder Folien aufgebracht werden. Die Beschichtungsmaterialien haben eine Dicke von 0,1 bis 500 µm. Die UV-Absorber der Formeln (CC) bis (CCVI) werden im Konzentrationsbereich bis 30 Gew.-%, vorzugsweise 0,01 bis 25 Gew.-% in den Beschichtungsmaterialien eingesetzt.

Die Nanoteilchen werden in den Beschichtungsmaterialien dispergiert eingesetzt. Sie werden im Konzentrationsbereich von 0,001 bis 30, vorzugsweise 0,01 bis 10 Atom-% eingesetzt.

Die Einarbeitung der Nanoteilchen in solche Materialien kann nach gängigen Methoden erfolgen, beispielsweise gemäß WO-A 95/09 895), WO-A 92/21 315, EP-A 0 628 303.

Die Beschichtungsmaterialien können aber auch zusätzlich andere Lichtschutzmaterialien wie Quencher oder Radikalfänger enthalten, wie sie im Kunststoffbereich üblich sind, beispielsweise UVINUL® 4049H (BASF), UVINUL® 4050H (BASF).

Bevorzugt sind solche erfindungsgemäßen UV-geschützten elektrochromen Vorrichtungen, in denen

a) die reduzierbare Substanz mindestens eine, vorzugsweise wenigstens zwei chemisch reversible Reduktionswellen im cyclischen Voltammogramm und die oxidierbare Substanz entsprechend mindestens eine, vorzugsweise wenigstens zwei chemisch reversible Oxidationswellen besitzen, oder

b) die reduzierbare Substanz und die oxidierbare Substanz über eine Brücke B kovalent aneinander gebunden sind, oder

c) als reduzierbare und/oder oxidierbare Substanz solche ausgewählt sind, bei denen der reversible Übergang zwischen der oxidierbaren Form und der reduzierbaren Form oder umgekehrt mit dem Bruch bzw. dem Aufbau einer σ-Bindung verbunden ist, oder

d) die reduzierbare Substanz und/oder die oxidierbare Substanz Metallsalze oder Metallkomplexe sind von solchen Metallen, die in mindestens zwei Oxidationsstufen existieren, oder

e) die reduzierbare und/oder oxidierbare Substanz Oligo- und Polymere sind, die mindestens eines der genannten Redoxsysteme, aber auch Paare solcher Redoxsysteme, wie sie unter a) bis d) definiert sind, enthalten, oder

f) als reduzierbare und/oder oxidierbare Substanz Mischungen der in a) bis e) beschriebenen Substanzen eingesetzt werden, vorausgesetzt diese Mischungen enthalten mindestens ein reduzierbares und mindestens ein oxidierbares Redoxsystem.

Durch Auswahl der elektrochromen Verbindungen $RED_1$ und $OX_2$ und/oder Mischungen davon lassen sich beliebige monochrome Farbtöne einstellen. Für eine polychrome Farbdarstellung können zwei oder mehrere solcher elektrochromer Vorrichtungen flächig aufeinander gelegt werden, wobei jede dieser Vorrichtungen einen anderen Farbton erzeugen kann. Vorzugsweise wird ein solcher Stapel so aufgebaut, dass die sich berührenden Vorrichtungen eine lichtdurchlässige Platte gemeinsam haben, die dann auch auf beiden Seiten leitfähig beschichtet ist und je nach Ausführung in Segmente unterteilt ist. Beispielsweise besteht dann ein Stapel aus drei elektrochromen Vorrichtungen aus mindestens vier Platten. Durch Einschalten von Segmenten in verschiedenen dieser gestapelten Vorrichtungen lassen sich mehrfarbige Anzeigen realisieren. Werden hintereinander liegende Segmente verschiedener solcher Vorrichtungen eingeschaltet, erhält man Mischfarben. So lassen sich im Rahmen einer Trichromie beliebige Farben darstellen, also beispielsweise bunte Bilder.

Im Sinne der Erfindung geeignete $OX_2$ und $RED_1$ sind solche Substanzen, die bei ihrer Reduktion bzw. Oxidation an der Kathode bzw. Anode in dem genannten Lösungsmittel Produkte REDE und $OX_1$ liefern, die keine chemische Folgereaktion eingehen, sondern komplett wieder zu $OX_2$ und RED, oxidiert bzw. reduziert werden können.

Vorzugsweise besitzen die elektrochromen Verbindungen RED, oder $OX_2$ in ihrem entsprechenden geschalteten, farbigen Zustand $OX_1$ bzw. $RED_2$ neben der eigentlichen, für die Funktion der elektrochromen Vorrichtung wichtigen starken Absorption im sichtbaren Teil des Lichtspektrums eine weitere starke Absorption im Bereich 350 bis 450 nm, also im Übergangsbereich vom ultravioletten zum violetten und blauen Licht.

Geeignete reduzierbare Substanzen $OX_2$ sind beispielsweise

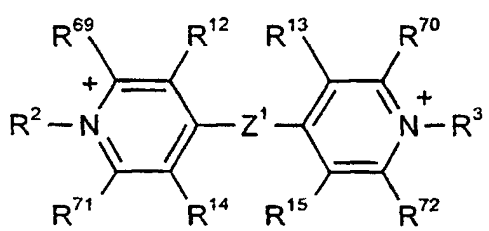 2 X- (I),

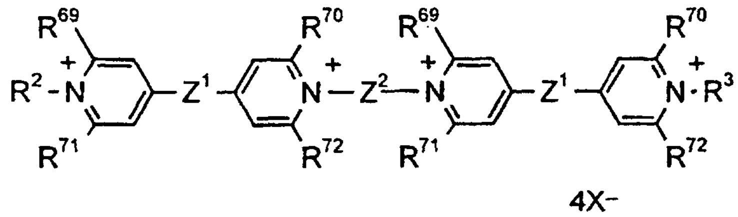

(II),

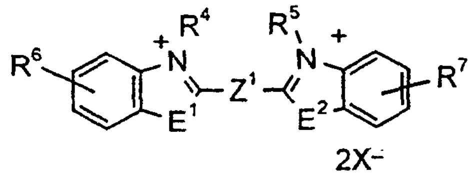

(III),

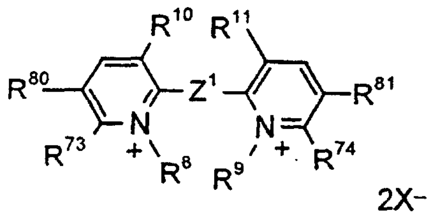

(IV),

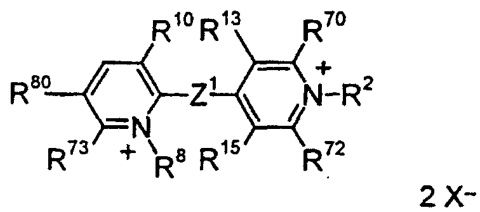

(V),

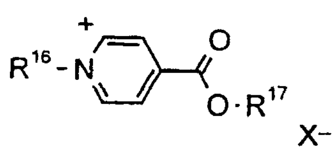

(VI),

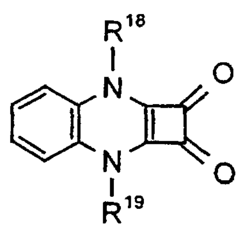

(VII),

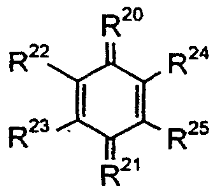

(VIII),

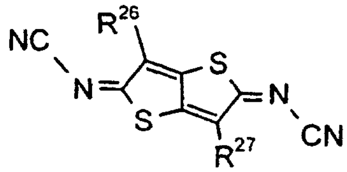

(IX),

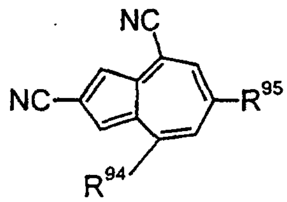

(X),

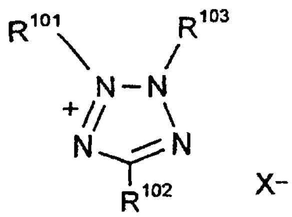

(CI),

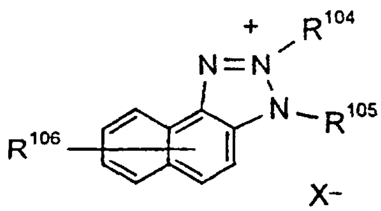

(CII),

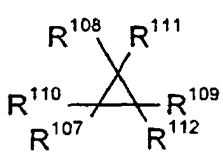

(CIII),

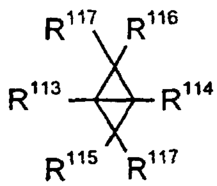

(CIV),

worin

| | |
|---|---|
| $R^2$ bis $R^5$, $R^8$, $R^9$, $R^{16}$ bis $R^{19}$ | unabhängig voneinander $C_1$- bis $C_{18}$-Alkyl, $C_2$- bis $C_{12}$-Alkenyl, $C_4$- bis $C_7$-Cycloalkyl, $C_7$- bis $C_{15}$-Aralkyl oder $C_6$- bis $C_{10}$-Aryl bedeuten oder |
| $R^4$; $R^5$ bzw. $R^8$; $R^9$ | gemeinsam eine $-(CH_2)_2-$ oder $-(CH_2)_3$-Brücke bilden können, |
| $R^6$, $R^7$ und $R^{22}$ bis $R^{25}$ | unabhängig voneinander Wasserstoff, $C_1$- bis $C_4$-Alkyl, $C_1$- bis $C_4$-Alkoxy, Halogen, Cyan, Nitro oder $C_1$- bis $C_4$-Alkoxycarbonyl bedeuten oder |
| $R^{22}$; $R^{23}$ und/oder $R^{24}$; $R^{25}$ | eine -CH=CH-CH=CH-Brücke bilden können, |
| $R^{10}$; $R^{11}$, $R^{10}$; $R^{13}$, $R^{12}$; $R^{13}$ und $R^{14}$; $R^{15}$ | unabhängig voneinander Wasserstoff oder paarweise eine $-(CH_2)_2-$, $-(CH_2)_3-$ oder -CH=CH-Brücke bedeuten, |
| $R^{20}$ und $R^{21}$ | unabhängig voneinander O, N-CN, $C(CN)_2$ oder N-C6- bis $C_{10}$-Aryl bedeuten, |
| $R^{26}$ und $R^{37}$ | Wasserstoff, $C_1$- bis $C_4$-Alkyl, $C_1$- bis $C_4$-Alkoxy, Halogen, Cyan, Nitro, $C_1$- bis $C_4$-Alkoxycarbonyl oder $C_6$- bis $C_{10}$-Aryl bedeuten, |
| $R^{69}$ bis $R^{74}$, $R^{80}$ und $R^{81}$ | unabhängig voneinander Wasserstoff oder $C_1$- bis $C_6$-Alkyl bedeuten oder |
| $R^{69}$; $R^{12}$, $R^{70}$; $R^{13}$, $R^{73}$; $R^{80}$ und/oder $R^{74}$; $R^{81}$ | gemeinsam eine -CH=CH-CH=CH- Brücke bilden, |
| $E^1$ und $E^2$ | unabhängig voneinander O, S, $NR^1$ oder $C(CH_3)_2$ bedeuten oder |
| $E^1$ und $E^2$ | gemeinsam eine $-N-(CH_2)_2-N$-Brücke bilden, |
| $R^1$ | $C_1$- bis $C_{18}$-Alkyl, $C_2$- bis $C_{12}$-Alkenyl, $C_4$- bis $C_7$-Cycloalkyl, $C_7$- bis $C_{15}$-Aralkyl, $C_6$- bis $C_{10}$-Aryl bedeutet, |
| $Z^1$ | eine direkte Bindung, -CH=CH-, $-C(CH_3)=CH-$, -C(CN)=CH-, -CCl=CCl-, -C(OH)=CH-, -CCl=CH-, -C≡C-, -CH=N-N=CH-, $-C(CH_3)=N-N=C(CH_3)-$ oder -CCl=N-N=CCl- bedeutet, |
| $Z^2$ | $-(CH_2)_r-$ oder $-CH_2-C_6H_4-CH_2-$ bedeutet, |
| r | eine ganze Zahl von 1 bis 10 bedeutet, |
| $R^{94}$ und $R^{95}$ | unabhängig voneinander Wasserstoff oder Cyano bedeuten, |
| $R^{101}$ bis $R^{105}$ | unabhängig voneinander $C_6$- bis $C_{10}$-Aryl oder einen ggf. benzanellierten aromatischen oder quasiaromatischen fünf- oder sechsgliedrigen heterocyclischen Ring bedeuten, |
| $R^{107}$, $R^{109}$, $R^{113}$ und $R^{114}$ | unabhängig voneinander einen Rest der Formeln (CV) bis (CVII) |

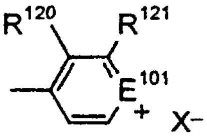

(CV),

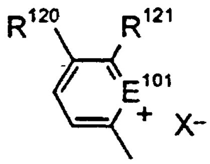

(CVI),

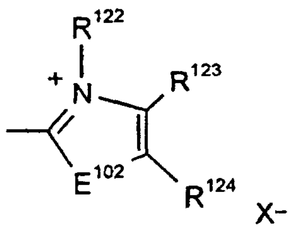

(CVII)

bedeuten,

| | |
|---|---|
| $R^{108}$, $R^{115}$ und $R^{116}$ | unabhängig voneinander $C_6$- bis $C_{10}$-Aryl oder einen Rest der Formel (CV) bedeuten, |
| $R^{110}$ bis $R^{112}$, $R^{117}$ und $R^{118}$ | unabhängig voneinander Wasserstoff, $C_1$- bis $C_4$-Alkyl, Halogen oder Cyano bedeuten, |
| $E^{101}$ und $E^{102}$ | unabhängig voneinander O, S oder N-$R^{119}$ bedeuten, |
| $R^{119}$ und $R^{122}$ | unabhängig voneinander $C_1$- bis $C_{18}$-Alkyl, $C_2$- bis $C_8$-Alkenyl, C4- bis $C_7$-Cycloalkyl, $C_7$- bis $C_{15}$-Aralkyl oder $C_6$- bis $C_{10}$-Aryl bedeuten, |
| $R^{106}$, $R^{120}$, $R^{121}$, $R^{123}$ und $R^{124}$ | unabhängig voneinander Wasserstoff, $C_1$- bis $C_4$-Alkyl, $C_1$- bis $C_4$-Alkoxy, Halogen, Cyano, Nitro oder $C_1$- bis $C_4$-Alkoxycarbonyl bedeuten oder |
| $R^{120}$, $R^{121}$ bzw. $R^{123}$, $R^{124}$ | gemeinsam eine -CH=CH-CH=CH-Brücke bilden und |
| $X^-$ | ein unter den Bedingungen redox-inertes Anion bedeutet. |

Geeignete oxidierbare Substanzen $RED_1$ sind beispielsweise

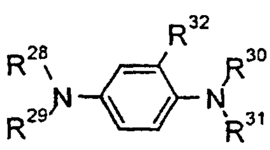

(XX),

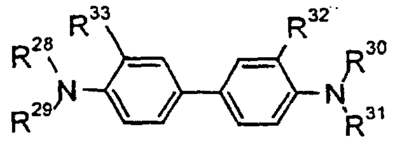

(XXI),

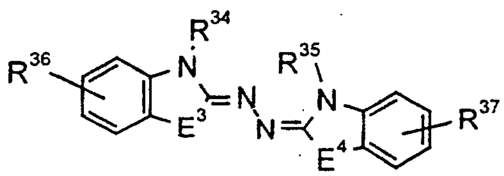

(XXII),

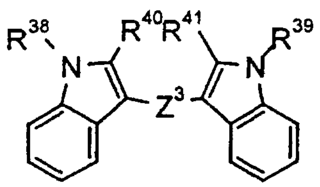

(XXIII),

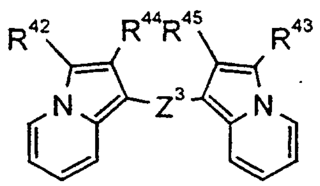

(XXIV),

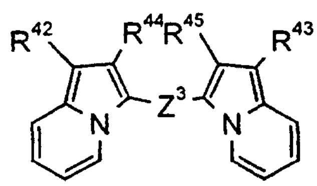

(XXV),

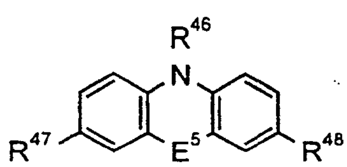

(XXVI),

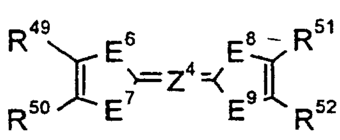

(XXVII),

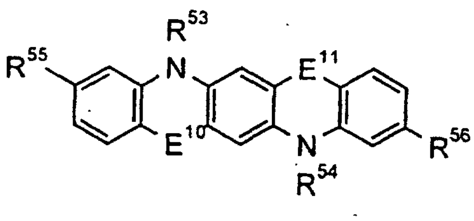

(XXVIII),

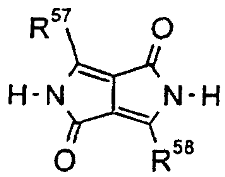

(XXIX),

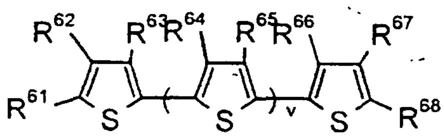

(XXX),

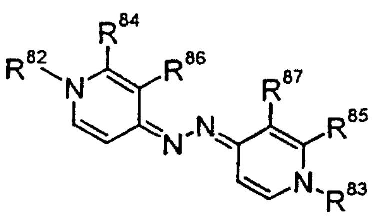

(XXXI),

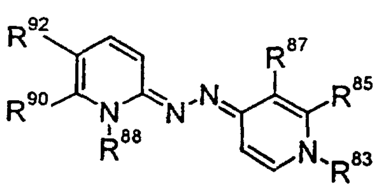

(XXXII),

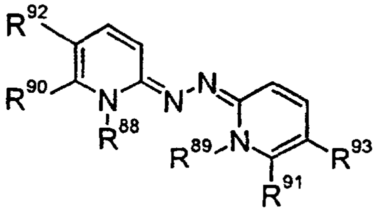

(XXXIII),

worin

$R^{28}$ bis $R^{31}$, $R^{34}$, $R^{35}$, $R^{38}$, $R^{39}$, $R^{46}$, $R^{53}$ und $R^{54}$ unabhängig voneinander $C_1$- bis $C_{18}$-Alkyl, $C_2$- bis $C_{12}$-Alkenyl, $C_4$- bis $C_7$-Cycloalkyl, C,- bis $C_{15}$-Aralkyl oder $C_6$- bis $C_{10}$-Aryl bedeuten,

$R^{32}$, $R^{33}$, $R^{36}$, $R^{37}$, $R^{40}$, $R^{41}$, $R^{42}$ bis $R^{45}$, $R^{47}$, $R^{48}$, $R^{49}$ bis $R^{52}$ und $R^{55}$ bis $R^{58}$ unabhängig voneinander Wasserstoff, $C_1$- bis $C_4$-Alkyl, $C_1$- bis $C_4$-Alkoxy, Halogen, Cyan, Nitro, $C_1$- bis $C_4$-Alkoxycarbonyl, $C_6$- bis $C_{10}$-Aryl bedeuten

und

$R^{57}$ und $R^{58}$ zusätzlich einen aromatischen oder quasiaromatischen fünf- oder sechsgliedrigen heterocyclischen Ring, der gegebenenfalls benzanneliert ist, bedeuten und $R^{48}$ zusätzlich $NR^{75}R^{76}$ bedeutet oder

$R^{49}$; $R^{50}$ und/oder $R^{51}$; $R^{52}$ eine $-(CH_2)_3-$, $-(CH_2)_4-$, $-(CH_2)_5-$ oder -CH=CH-CH=CH- Brücke bilden,

$Z^3$ eine direkte Bindung, eine -CH=CH- oder -N=N-Brücke bedeutet,

$=Z^4=$ eine direkte Doppelbindung, eine =CH-CH= oder =N-N=Brücke bedeutet,

$E^3$ bis $E^5$, $E^{10}$ und $E^{11}$ unabhängig voneinander O, S, $NR^{59}$ oder $C(CH_3)_2$ bedeuten und

$E^5$ zusätzlich C=O oder $SO_2$ bedeutet,

$E^3$ und $E^4$ unabhängig voneinander zusätzlich -CH=CH- bedeuten können,

$E^6$ bis $E^9$ unabhängig voneinander S, Se oder $NR^{59}$ bedeuten,

$R^{59}$, $R^{75}$ und $R^{76}$ unabhängig voneinander $C_1$- bis $C_{12}$-Alkyl, $C_2$- bis $C_8$-Alkenyl, $C_4$-bis $C_7$-Cycloalkyl, $C_7$- bis $C_{15}$-Aralkyl, $C_6$- bis $C_{10}$-Aryl bedeuten,

und

$R^{75}$ zusätzlich Wasserstoff bedeutet oder $R^{75}$ und $R^{76}$ in der Bedeutung von $NR^{75}R^{76}$ gemeinsam mit dem N-Atom, an das sie gebunden sind, einen fünf- oder sechsgliedrigen Ring bedeuten, der gegebenenfalls weitere Heteroatome enthält,

$R^{61}$ bis $R^{68}$ unabhängig voneinander Wasserstoff, $C_1$- bis $C_6$-Alkyl, $C_1$- bis $C_4$-Alkoxy, Cyan, $C_1$- bis $C_4$-Alkoxycarbonyl oder $C_6$- bis $C_{10}$-Aryl bedeuten und

$R^{61}$; $R^{62}$ und $R^{67}$; $R^{68}$ unabhängig voneinander zusätzlich eine $-(CH_2)_3-$, $-(CH_2)_4-$ oder -CH=CH-CH=CH-Brücke bilden oder

$R^{62}$; $R^{63}$, $R^{64}$; $R^{65}$ und $R^{66}$; $R^{67}$ eine $-O-CH_2CH_2-O-$ oder $-O-CH_2CH_2CH_2-O-$Brücke bilden,

v eine ganze Zahl zwischen 0 und 100 bedeutet,

$R^{82}$, $R^{83}$, $R^{88}$ und $R^{89}$ unabhängig voneinander $C_1$- bis $C_{18}$-Alkyl, $C_2$- bis $C_{12}$-Alkenyl, $C_4$- bis $C_7$-Cycloalkyl, $C_7$- bis $C_{15}$-Aralkyl oder $C_6$- bis $C_{10}$-Aryl bedeuten,

$R^{84}$ bis $R^{87}$ und $R^{90}$ bis $R^{93}$ unabhängig voneinander Wasserstoff oder $C_1$- bis $C_6$-Alkyl bedeuten oder

$R^{84}$; $R^{86}$, $R^{85}$; $R^{87}$, $R^{90}$; $R^{92}$ und/oder $R^{91}$; $R^{93}$ gemeinsam eine -CH=CH-CH=CH- Brücke bilden.

Ebenfalls geeignet als $RED_1$ sind Anionen wie z.B. $I^-$, $I_3^-$, $Br^-$, $SCN^-$.

Über eine Brücke B verknüpfte, gegebenenfalls oligo- oder polymere Redoxsysteme sind beispielsweise solche der Formel

$$Y\text{-}[\text{-}(\text{-}B\text{-}Z\text{-})_a\text{-}(\text{-}B\text{-}Y\text{-})_b\text{-}]_c\text{-}B\text{-}Z \qquad (L),$$

worin

Y und Z unabhängig voneinander für einen Rest $OX_2$ oder RED, stehen, wobei vorzugsweise mindestens ein Y für $OX_2$ und mindestens ein Z für $RED_1$ steht,

wobei

$OX_2$ für den Rest eines reversibel elektrochemisch reduzierbaren Redoxsystems steht, und

$RED_1$ für den Rest eines reversibel elektrochemisch oxidierbaren Redoxsystems steht,

B für ein Brückenglied steht,

c für eine ganze Zahl von 0 bis 1000 steht, und

a und b unabhängig voneinander für eine ganze Zahl von 0 bis 100 stehen.

Vorzugsweise ist $(a+b)\cdot c \leq 10.000$.

Hierbei ist unter reversibel elektrochemisch reduzierbar oder oxidierbar gemeint, dass die Elektronenübertragung ohne oder auch mit Änderung des σ-Gerüsts erfolgen kann ganz im Sinne der oben genannten Definition der erfindungsgemäßen $OX_2$ und $RED_1$.

Insbesondere sind mit den elektrochromen Verbindungen der Formel (L) solche der Formeln

$$OX_2\text{-}B\text{-}RED_1 \qquad (La),$$

$$OX_2\text{-}B\text{-}RED_1\text{-}B\text{-}OX_2 \qquad (Lb),$$

$$RED_1\text{-}B\text{-}OX_2\text{-}B\text{-}RED_1 \qquad (Lc),$$

$$OX_2\text{-}(B\text{-}RED_1\text{-}B\text{-}OX_2)_d\text{-}B\text{-}RED_1 \qquad (Ld),$$

$$OX_2\text{-}(B\text{-}OX_2)_e\text{-}B\text{-}OX_2 \qquad (Le)$$

oder

$$RED_1\text{-}(B\text{-}RED_1)_e\text{-}B\text{-}RED_1 \qquad (Lf)$$

gemeint,
worin

$OX_2$, $RED_1$ und B die oben angegebene Bedeutung haben,

d für eine ganze Zahl von 1 bis 5 steht und

e für eine ganze Zahl von 0 bis 5 steht.

Mit $OX_2$ und $RED_1$ in den Formeln (L) und (La) bis (Lf) sind insbesondere Reste der oben beschriebenen Redoxsysteme der Formeln (I) bis (X), (CI) bis CIV) und (XX) bis (XXXIII) gemeint, wobei die Bindung zum Brückenglied B über einen der Reste $R^2$ bis $R^{19}$, $R^{22}$ bis $R^{27}$, $R^{28}$ bis $R^{58}$, $R^{61}$, $R^{62}$, $R^{67}$, $R^{68}$, $R^{83}$, $R^{88}$, $R^{122}$ oder im Falle, dass einer der Reste $E^1$ oder $E^2$ für $NR^1$ oder einer der Reste $E^3$ bis $E^{11}$ für $NR^{59}$ oder einer der Reste $E^{101}$ bis $E^{102}$ für $NR^{119}$ steht, über $R^1$, $R^{59}$ bzw. $R^{119}$ erfolgt und die genannten Reste dann für eine direkte Bindung stehen, und

B für eine Brücke der Formeln $-(CH_2)_n-$ oder $-[Y^1{}_s(CH_2)_m-Y^2]_o-(CH_2)_p-Y^3{}_q-$ steht, die durch $C_1$- bis $C_4$-Alkyl, $C_1$- bis $C_4$-Alkoxy, Halogen oder Phenyl substituiert sein kann,

$Y^1$ bis $Y^3$ unabhängig voneinander für O, S, $NR^{60}$, COO, CONH, NHCONH, Cyclopentandiyl, Cyclohexandiyl, Phenylen oder Naphthylen stehen,

$R^{60}$ $C_1$- bis $C_6$-Alkyl, $C_2$- bis $C_6$-Alkenyl, $C_4$- bis $C_7$-Cycloalkyl, $C_7$- bis $C_{15}$-Ar-alkyl oder $C_6$- bis $C_{10}$-Aryl bedeutet,

n eine ganze Zahl von 1 bis 12 bedeutet,

m und p unabhängig voneinander eine ganze Zahl von 0 bis 8 bedeuten,

o eine ganze Zahl von 0 bis 6 bedeutet und

q und s unabhängig voneinander 0 oder 1 bedeuten.

In ganz besonderem Maße sind mit $OX_2$ und $RED_1$ in den Formeln (L) und (La) bis (Lf) Reste der oben beschriebenen Redoxsysteme der Formeln (I), (V), (XX), (XXII), (XXIII), (XXV), (XXVI) und (XXXIII) gemeint.

Beispiele sind gemäß Formel (La)

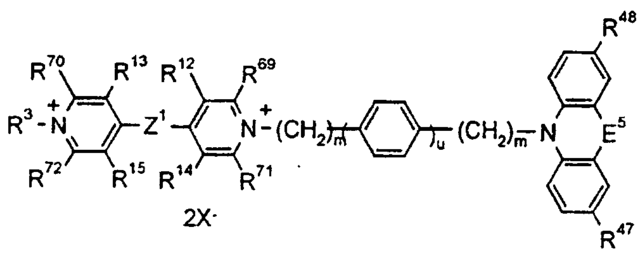

(LI),

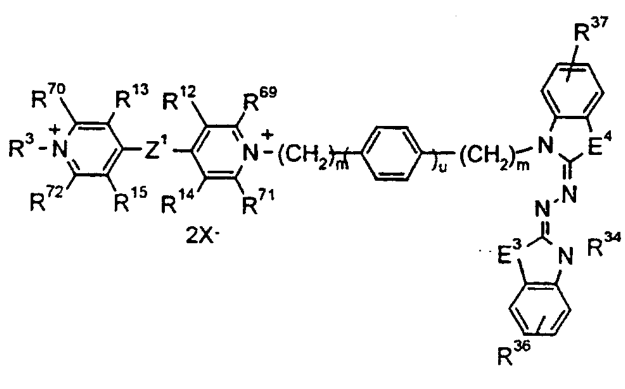

(LII),

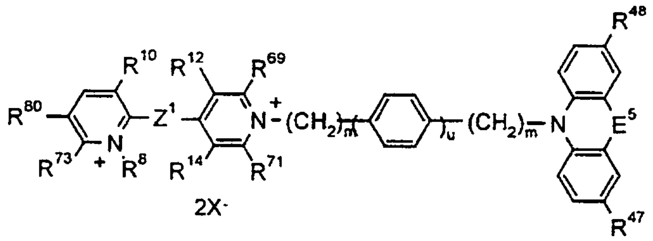

(LIII),

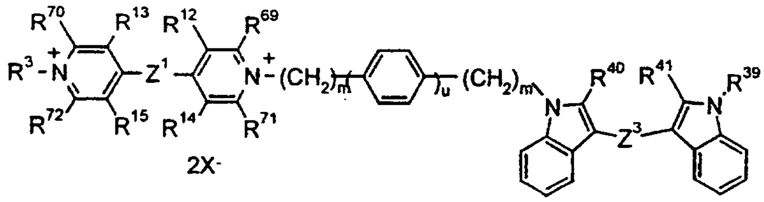

(LIV),

gemäß Formel (Lb)

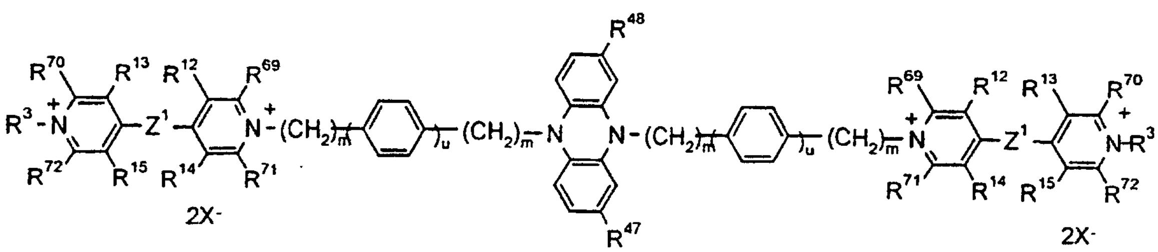

(LV),

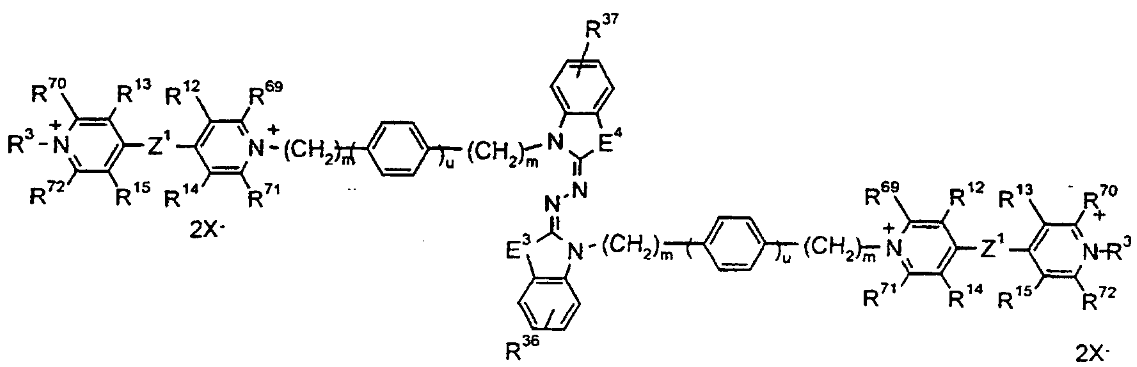

(LVI),

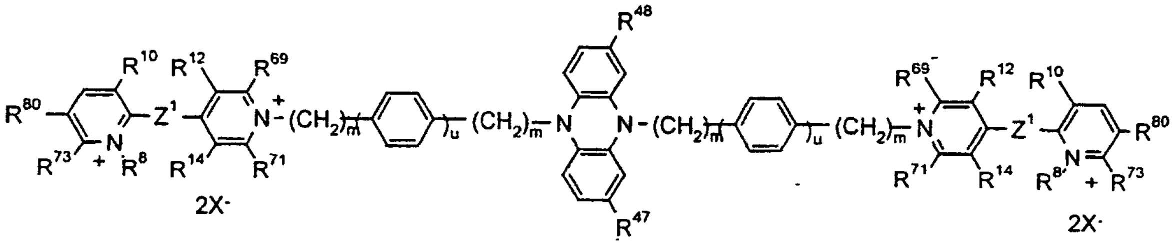

(LVII),

gemäß Formel (Lc)

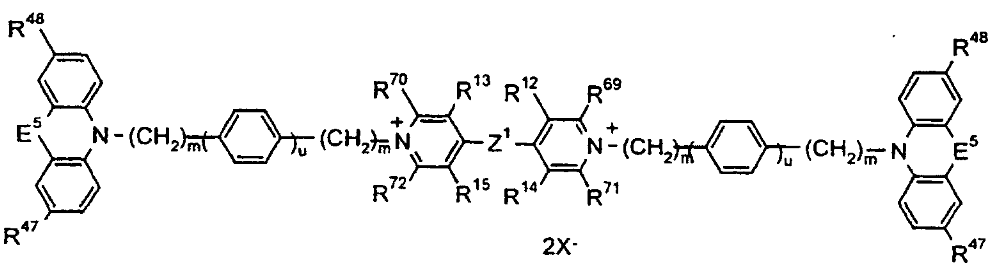

(LVIII),

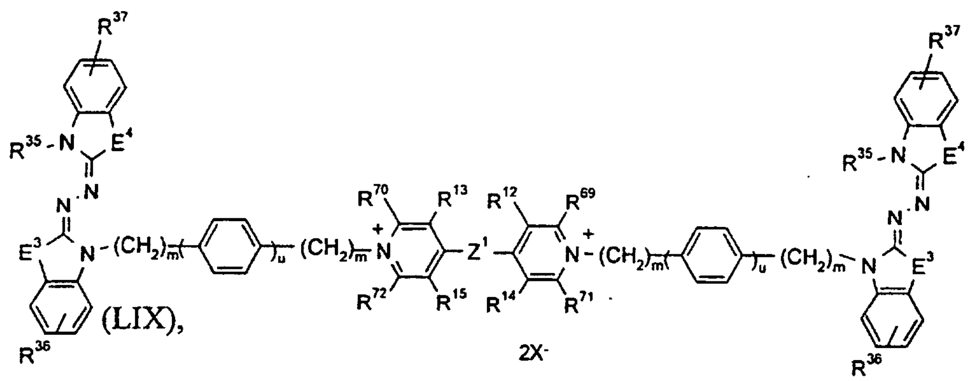

(LIX), (LIX),

gemäß Formel (Le)

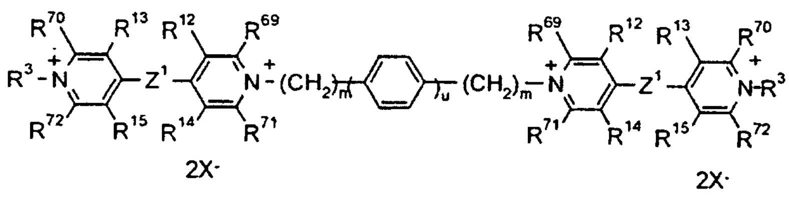

(LIX),

gemäß Formel (Lf)

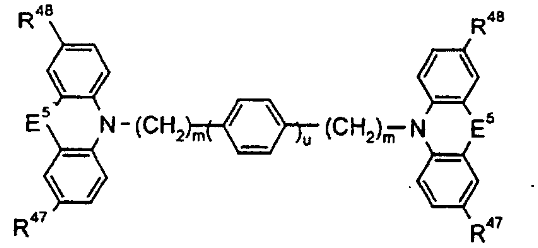

(LX),

worin

m für eine ganze Zahl von 1 bis 5 steht,

u für 0 oder 1 steht und

die anderen Reste die oben angegebene Bedeutung besitzen.

In einem anderen Typ oligo- oder polymerer Systeme können die Gruppierungen $OX_2$ und/oder $RED_1$ auch beispielsweise als Seitenketten an einer Hauptgruppe, beispielsweise einem Poly(meth)acrylat, Silikon, Polycarbonat, Polyurethan, Polyhamstoff, Polyester, Polyamid, Cellulose oder anderen oligo- oder polymeren Systemen angebunden sein.

Beispiele für Metallsalze oder Metallkomplexe, die als $OX_2$ oder $RED_1$ eingesetzt werden können, sind $Fe^{3+/2+}$, $Ni^{3+/2+}$, $Co^{3+/2+}$, $Cu^{2+/+}$, $[Fe(CN)_6]^{3-/4-}$, $Fe_4[Fe(CN)_6]_3^{0/4-}$, $[Co(CN)_6]^{3-/4-}$, $[Fe(Cyclopentadienyl)_2]^{0/+}$, Lu $(Pc)^{2+ \text{ bis } 2-}$ (PC = Phthalocyanin), $Fe[Fe(CN)_6]^{0/1-}$.

Als Gegenionen für Metallionen und kationische Komplexe kommen alle redox-inerten Anionen $X^-$, wie sie später noch genauer beschrieben werden, in Frage, als Gegenionen der anionischen Komplexe alle redox-inerten Kationen $M'^+$ in Frage, beispielsweise Alkalimetalle oder quaternierte Ammoniumsalze wie $Na^+$, $K^+$, $N(CH_3)_4^+$, $N(C_4H_9)_4^+$, $C_6H_5CH_2N(CH_3)_3^+$ und andere.

Ebenfalls bevorzugt ist eine elektrochrome Vorrichtung, die Mischungen der oben allgemein und bevorzugt genannten elektrochromen Substanzen enthält. Beispiele für solche Mischungen sind (I) + (CI) + (XXVI), (I) + (IV) + (XXII), (La) + (I) + (XXVI), (La) + (CI), (LIX) + (LXL), ohne dass dadurch irgendeine Einschränkung ausgedrückt werden soll.

Die Mischungsverhältnisse sind in weiten Grenzen variabel. Sie erlauben die Optimierung eines gewünschten Farbtons oder Schwärzegrades und/oder die Optimierung der gewünschten Dynamik der Vorrichtung.

In den oben genannten Substituentenbedeutungen sind Alkylreste, auch abgewandelte, beispielsweise Alkoxy- oder Aralkylreste, vorzugsweise solche mit 1 bis 12 C-Atomen, insbesondere mit 1 bis 8 C-Atomen, sofern nichts anderes angegeben ist. Sie können geradkettig oder verzweigt sein und gegebenenfalls weitere Substituenten tragen wie $C_1$- bis $C_4$-Alkoxy, Fluor, Chlor, Hydroxy, Cyano, $C_1$- bis $C_4$-Alkoxycarbonyl oder COOH.

Unter Cycloalkylresten werden vorzugsweise solche mit 3 bis 7 C-Atomen, insbesondere mit 5 oder 6 C-Atomen verstanden.

Alkenylreste sind vorzugsweise solche mit 2 bis 8 C-Atomen, insbesondere 2 bis 4 C-Atomen.

Arylreste, auch solche in Aralkylresten, sind Phenyl oder Naphthylreste, insbesondere Phenylreste. Sie können durch 1 bis 3 der folgenden Reste substituiert sein: $C_1$- bis $C_6$-Alkyl, $C_1$- bis $C_6$-Alkoxy, Fluor, Chlor, Brom, Cyano, Hydroxy, $C_1$- bis $C_6$-Alkoxycarbonyl oder Nitro. Zwei benachbarte Reste können auch einen Ring bilden.

Unter gegebenenfalls benzanellierten aromatischen oder quasiaromatischen fünfoder sechsgliedrigen heterocyclischen Ringen werden insbesondere Imidazol, Benzimidazol, Oxazol, Benzoxazol, Thiazol, Benzthiazol, Indol, Pyrazol, Triazol, Thiophen, Isothiazol, Benzisothiazol, 1,3,4- oder 1,2,4-Thiadiazol, Pyridin, Chinolin, Pyrimidin und Pyrazin verstanden. Sie können durch 1 bis 3 der folgenden Reste substituiert sein: $C_1$- bis $C_6$-Alkyl, $C_1$- bis $C_6$-Alkoxy, Fluor, Chlor, Brom, Cyano, Nitro, Hydroxy, Mono- oder Di-$C_1$- bis $C_6$-alkylamino, $C_1$- bis $C_6$-Alkoxycarbonyl, $C_1$- bis $C_6$-Alkylsulfonyl, $C_1$- bis $C_6$- Alkanoylamino, Phenyl oder Naphthyl. Zwei benachbarte Reste können auch einen Ring bilden.

Die elektrochromen Substanzen sind entweder bekannt (Topics in Current Chemistry, Vol. 92, S. 1-44, (1980), Angew. Chem. 90, 927 (1978), Adv. Mater. 3, 225, (1991), DE-OS 3.917.323, J. Am. Chem. Soc. 117, 8528 (1995), J.

C. S. Perkin II 1990, 1777, DE-OS 4.435.211, EP-A 476.456, EP-A 476.457, DE-OS 4.007.058, J. Org. Chem. 57, 1849 (1992) und J. Am. Chem. Soc. 99, 6120, 6122 (1977) oder lassen sich analog herstellen. Die Verbindungen der Formel (L) sind ebenfalls bekannt (WO 97/30134) oder lassen sich aus an sich bekannten Bausteinen beispielsweise nach folgendem Schema synthetisieren:

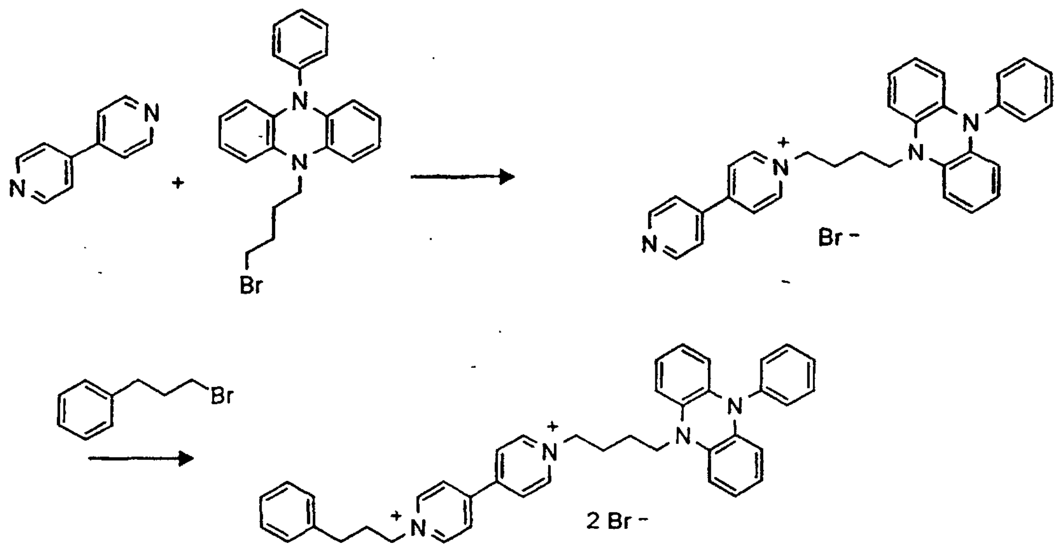

Synthetisch bedingte Ionen wie Bromid werden im Anschluss gegen redox-inerte Ionen ausgetauscht.

Besonders bevorzugt sind die elektrochromen Verbindungen der Formeln (I), (II), (III), (IV), (V), (XXII), (XXIII), (XXVI), (XXVII), (XXXI), (XXXII), (XXXIII), sowie die mindestens eine dieser Formeln als $OX_2$ bzw. $RED_1$ enthaltenden überbrückten Verbindungen der Formel (L).

Bei dieser Auswahl und ebenfalls bei den anschließend aufgeführten besonderen und herausragenden Auswahlen an elektrochromen Verbindungen muss stets sichergestellt sein, dass das elektrochrome Medium mindestens ein $OX_2$ und mindestens ein $RED_1$ enthält. Wenn beispielsweise $OX_2$ = Formel (I) ist, dann muss das elektrochrome Medium auch ein $RED_1$ enthalten, vorzugsweise aus der Auswahl der bevorzugten $RED_1$ der Formeln (XXII), (XXIII), (XXVI), (XXVII), (XXXI), (XXXI), und (XXXIII), aber auch aus der oben allgemein aufgeführten Auswahl der $RED_1$ der Formeln (XX) bis (XXXIII) sowie der oben erwähnten, als $RED_1$ geeigneten Metallsalze, -komplexe oder Anionen $X^-$. Dies gilt analog auch für die bevorzugten und besonders bevorzugten $RED_1$.

Ganz besonders bevorzugt sind die elektrochromen Verbindungen der Formeln (I), (IV), (V), (XXII), (XXIII), (XXVII), (XXXIII),
worin

| | |
|---|---|
| $R^2$, $R^3$, $R^8$ und $R^9$ | unabhängig voneinander Methyl, Ethyl, Propyl, Butyl, Pentyl, Hexyl, Heptyl, Benzyl, Phenethyl, Phenylpropyl, Phenyl, 2-Methylphenyl oder 2,6-Dimethylphenyl bedeuten oder |
| $R^8$ und $R^9$ | gemeinsam eine $-(CH_2)_2-$ oder $-(CH_2)_3$-Brücke bilden, |
| $R^{10}$ bis $R^{15}$ | Wasserstoff bedeuten, |
| $R^{69}$ bis oder $R^{73}$, $R^{80}$ und $R^{81}$ | unabhängig voneinander Wasserstoff oder Methyl bedeuten |
| $R^{12}$; $R^{69}$, $R^{13}$; $R^{70}$, $R^{73}$; $R^{80}$ und/oder $R^{74}$; $R^{81}$ | eine -CH=CH-CH=CH-Brücke bilden, |
| $Z^1$ | eine direkte Bindung oder -CH=CH- bedeutet, |
| $X^-$ | ein unter den Bedingungen redox-inertes Anion bedeutet, |
| $R^{34}$, $R^{35}$, $R^{38}$, $R^{39}$, $R^{88}$ und $R^{89}$ | unabhängig voneinander Methyl, Ethyl, Propyl, Butyl, Benzyl, Phenethyl, Phenylpropyl oder Phenyl bedeuten, |

| | |
|---|---|
| $R^{36}$ und $R^{37}$ | Wasserstoff bedeuten, |
| $Z^3$ | eine direkte Bindung oder eine -CH=CH-Brücke bedeutet, |
| $Z^4$ | eine direkte Doppelbindung bedeutet, |
| $R^{40}$ und $R^{41}$ | gleich sind und Wasserstoff oder Methyl bedeuten, |
| $E^3$ und $E^4$ | gleich sind und S, N-$R^{59}$ oder $C(CH_3)_2$ bedeuten, |
| $E^6$ bis $E^9$ | gleich sind und S bedeuten, |
| $R^{49}$ bis $R^{52}$ | unabhängig voneinander Wasserstoff, Methyl, Cyano oder Methoxycarbonyl bedeuten oder |
| $R^{49}$; $R^{50}$ und/oder $R^{51}$; $R^{52}$ | eine $-(CH_2)_3-$ oder -CH=CH-CH=CH-Brücke bilden, |
| $R^{90}$ bis $R^{93}$ | Wasserstoff bedeuten oder |
| $R^{90}$; $R^{92}$ und/oder $R^{91}$; $R^{93}$ | eine -CH=CH-CH=CH-Brücke bilden und |
| $R^{59}$ | Methyl, Ethyl, Propyl oder Butyl bedeutet, |

sowie die mindestens eine dieser Formeln als $OX_2$ bzw. $RED_1$ enthaltenden überbrückten Verbindungen der Formel (L), insbesondere der Formel (La),
wobei

B $-(CH_2)_n-$ bedeutet und

n eine ganze Zahl von 3 bis 6 bedeutet.

Im Sinne der Erfindung ganz herausragend geeignet sind die elektrochromen Verbindungen der Formel (I), worin

| | |
|---|---|
| $R^2$ und $R^3$ | gleich sind und Methyl, Ethyl, Butyl, Heptyl oder Phenylpropyl bedeuten, |
| $R^{12}$ bis $R^{15}$ und $R^{69}$ bis $R^{72}$ | Wasserstoff bedeuten, |
| Z' | eine direkte Bindung bedeutet und |
| $X^-$ | ein redoxinertes Anion oder $I^-$ bedeutet. |

Im Sinne der Erfindung ebenfalls ganz herausragend geeignet sind die elektrochromen Verbindungen der Formel (La),
worin

| | |
|---|---|
| $OX_2$ | für einen Rest der Formel (I) steht, |
| $RED_1$ | für einen Rest der Formel (XXVI) steht und |
| B | für-$(CH_2)_n$- steht, |

wobei

| | |
|---|---|
| n | eine ganze Zahl von 3 bis 6 bedeutet, |
| $R^2$ und $R^{46}$ | eine direkte Bindung zu B bedeuten, |

| | |
|---|---|
| $R^3$, $R^{12}$ bis $R^{15}$, $R^{69}$ bis $R^{72}$, $Z^1$ und $X^-$ | die oben angegebene herausragende Bedeutung besitzen, |
| $R^{47}$ und $R^{48}$ | Wasserstoff bedeuten, |
| $E^5$ | $NR^{59}$ bedeutet und |
| $R^{59}$ | Methyl, Ethyl, Butyl, Heptyl, Phenylpropyl oder Phenyl bedeutet. |

Die erfindungsgemäße UV-geschützte elektrochrome Vorrichtung enthält in ihrem elektrochromen Medium vorzugsweise mindestens ein Lösungsmittel, in dem die elektrochromen Substanzen, gegebenenfalls ein Leitsalz und gegebenenfalls weitere Zusätze gelöst sind. Das Lösungsmittel kann auch gelförmig verdickt sein, beispielsweise durch Polyelektrolyte, poröse Feststoffe oder Nanopartikel mit großer aktiver Oberfläche.

Geeignete Lösungsmittel sind alle unter den gewählten Spannungen redox-inerten Lösungsmittel, die keine Elektrophile oder Nukleophile abspalten können oder selber als ausreichend starke Elektrophile oder Nukleophile reagieren und so mit den farbigen Radikalionen reagieren könnten. Beispiele sind Propylencarbonat, γ-Butyrolacton, Acetonitril, Propionitril, Benzonitril, Glutaronitril, Methylglutarnitril, 3,3'-Oxydipropionitril, Hydroxypropionitril, Dimethylformamid, N-Methylpyrrolidon, Sulfolan, 3-Methylsulfolan oder Mischungen davon. Bevorzugt sind Propylencarbonat, Benzonitril und Mischungen untereinander oder mit Glutaronitril oder 3-Methylsulfolan. Insbesondere bevorzugt ist Propylencarbonat. Ebenfalls insbesondere bevorzugt ist Benzonitril.

Die elektrochrome Lösung kann mindestens ein inertes Leitsalz enthalten. Insbesondere wenn wenigstens eine der Substanzen des Redoxpaares $RED_1/OX_2$ ionischer Natur ist, kann auf den Zusatz eines Leitsalzes verzichtet werden.

Als inertes Leitsalz sind Lithium-, Natrium- und Tetraalkylammoniumsalze geeignet, insbesondere letztere. Die Alkylgruppen können zwischen 1 und 18 C-Atome aufweisen und gleich oder verschieden sein. Bevorzugt ist Tetrabutylammonium. Als Anionen zu diesen Salzen, aber auch als Anionen $X^-$ in den Formeln (I) bis (VI), (CI), (CII) und (CV) bis (CVII) und in den Metallsalzen kommen alle redox-inerten, farblosen Anionen in Frage.

Beispiele sind Tetrafluoroborat, Tetraphenylborat, Cyano-triphenylborat, Tetramethoxyborat, Tetrapropoxyborat, Tetraphenoxyborat, Perchlorat, Chlorid, Nitrat, Sulfat, Phosphat, Methansulfonat, Ethansulfonat, Tetradecansulfonat, Pentadecansulfonat, Trifluormethansulfonat, Perfluorbutansulfonat, Perfluoroctansulfonat, Benzolsulfonat, Chlorbenzolsulfonat, Toluolsulfonat, Butylbenzolsulfonat, tert. Butylbenzolsulfonat, Dodecylbenzolsulfonat, Trifluormethylbenzolsulfonat, Hexafluorophosphat, Hexafluoroarsenat, Hexafluorosilicat, 7,8- oder 7,9-Dicarbanidoundecaborat(-1) oder (-2), die gegebenenfalls an den B- und/oder C-Atomen durch eine oder zwei Methyl-, Ethyl-, Butyl- oder Phenyl-Gruppen substituiert sind, Dodecahydro-dicarbadodecaborat(-2) oder B-Methyl-C-phenyl-dodecahydro-dicarbadodecaborat(-1).

Ebenfalls geeignet, auch als Anionen $X^-$ in den Formeln (I) bis (VI), (CI), (CII) und (CV) bis (CVII) und in den Metallsalzen, sind die oben erwähnten Anionen, die auch die Rolle eines $RED_1$ übernehmen können, beispielsweise $I^-$, $I_3^-$.

Die Leitsalze werden vorzugsweise im Bereich 0 bis 1 mol/l eingesetzt.

Als weitere Zusätze können Verdicker eingesetzt werden, um die Viskosität der elektroaktiven Lösung zu steuern. Das kann Bedeutung haben zur Vermeidung von Segretation, d.h. der Bildung von streifiger oder fleckiger Farbbildung bei längerem Betrieb der elektrochromen Vorrichtung im eingeschalteten Zustand, und zur Steuerung der Ausbleichgeschwindigkeit nach Abschalten des Stroms.

Als Verdicker eignen sich alle für diesen Zweck üblichen Verbindungen wie z. B. Polyacrylat, Polymethacrylat (Luctite L ®), Polycarbonat oder Polyurethan.

Als weitere Zusätze für die elektrochrome Lösung kommen zur fallweise Verstärkung des Schutzes vor UV-Licht (< 350 nm) UV-Absorber in Frage. Beispiele sind UVINUL® 3000 (2,4-Dihydroxybenzophenon, BASF), SANDUVOR® 3035 (2-Hydroxy-4-n-octyloxybenzophenon, Clariant), Tinuvin® 571 (2-(2H-Benzotriazol-2-yl)-6-dodecyl-4-methylphenol, Ciba), Cyasorb 24™ (2,2'-Dihydroxy-4-methoxybenzophenon, American Cyanamid Company), UVINUL® 3035 (Ethyl-2-cyano-3,3-diphenylacrylat, BASF), UVINUL® 3039 (2-Ethylhexyl-2-cyano-3,3-diphenylacrylat, BASF), UVINUL® 3088 (2-Ethylhexyl-p-methoxycinnamat, BASF), CHIMASSORB® 90 (2-Hydroxy-4-methoxybenzophenon, Ciba).

Bevorzugt sind die vier Letztgenannten. Ebenfalls bevorzugt sind Mischungen von UV-Absorbern, beispielsweise der vier Letztgenannten. Besonders bevorzugt ist die Mischung aus UVINUL® 3039 und CHIMASSORB® 90. Ebenfalls geeignet sind die oben beschriebenen UV-Absorber der Formeln (CC) bis (CCVI).

Die UV-Absorber werden im Bereich 0.01 bis 2 mol/l, vorzugsweise 0,04 bis 1 mol/l eingesetzt.

Die elektrochrome Lösung enthält die elektrochromen Substanzen $OX_2$ und $RED_1$, insbesondere die der Formeln (I) bis (X), (XX) bis (XXXIII), (CI) bis (CIV) und (L) jeweils in einer Konzentration von mindestens $10^{-4}$ mol/l, vorzugsweise 0,001 bis 0,5mol/l. Die Gesamtkonzentration aller enthaltenen elektrochromen Substanzen liegt vorzugsweise unter 1 mol/l.

Zum Betrieb der erfindungsgemäßen elektrochromen Vorrichtung wird ein konstanter, gepulster oder in seiner Amplitude sich verändernder, beispielsweise sich sinusförmig verändernder, Gleichstrom benutzt. Die Spannung hängt ab von der gewünschten Farbtiefe, insbesondere aber von den Reduktions- bzw. Oxidationspotentialen der verwendeten $OX_2$ und $RED_1$. Solche Potentiale können beispielsweise aus Topics in Current Chemistry, Volume 92, S. 1-44, (1980) oder Angew. Chem. 90, 927 (1978) oder der dort zitierten Literatur entnommen werden. Die Differenz ihrer Potentiale ist ein Richtwert für die erforderliche Spannung, jedoch kann die elektrochrome Vorrichtung bereits bei niedrigerer oder auch mit höherer Spannung betrieben werden. In vielen Fällen, z. B. bei Verwendung von $OX_2$ = Formel (I) oder (V) und $RED_1$ = Formel (XX), (XXII), (XXVI) oder (XXVII) oder deren Verknüpfung über eine Brücke gemäß Formel (L), insbesondere Formel (La) bis (Ld), liegt diese zum Betrieb nötige Potentialdifferenz $\leq$ 1 V. Solche elektrochromen Vorrichtungen können deshalb in einfacher Weise mit dem Strom aus photovoltaischen Siliciumzellen versorgt werden.

Wird die Spannung abgeschaltet, geht die erfindungsgemäße elektrochrome Vorrichtung wieder in ihren ursprünglichen Zustand zurück. Diese Löschung kann erheblich beschleunigt werden, wenn die kontaktierten Segmente bzw. Platten kurzgeschlossen werden. Auch durch mehrmaliges Umpolen der Spannung, gegebenenfalls auch bei gleichzeitiger Erniedrigung der Spannung, kann die Anzeige sehr rasch gelöscht werden.

Durch Variation der Schichtdicke der elektrochromen Vorrichtung, der Viskosität der elektrochromen Lösung und/oder der Diffusions- oder Driftfähigkeit der elektrochromen Substanzen lassen sich die Einschalt- und Ausschaltzeiten der Anzeigevorrichtung in weiten Grenzen beeinflussen. So zeigen beispielsweise dünne Schichten kürzere Schaltzeiten als dicke. Es lassen sich also schnell und langsam schaltbare Vorrichtungen bauen und so den jeweiligen Einsatzzwecken optimal anpassen.

Bei langsamen Vorrichtungen, insbesondere Anzeigevorrichtungen, kann zur Aufrechterhaltung der angezeigten Information im eingeschalteten Zustand ein Stromspar- oder Refresh-Mode benutzt werden. Nach Aufbau der anzuzeigenden Information-beispielsweise durch konstante oder sich mit hoher Frequenz verändernder oder gepulster Gleichspannung ausreichender Höhe wird auf gepulste oder sich verändernde Gleichspannung niedriger Frequenz umgeschaltet, wobei während der Phasen, in denen die Spannung Null beträgt, die Kontaktierung der Segmente nicht kurzgeschlossen wird. Diese niedrige Frequenz kann beispielsweise im Bereich von 1 Hz oder niedriger liegen, wobei die Dauer der Einschalt- und Ausschaltphasen nicht gleichlang zu sein brauchen, sondern beispielsweise die Ausschaltphasen deutlich länger sein können. Da sich während der Strompausen im nicht kurzgeschlossenen Zustand die Farbtiefe der angezeigten Information nur langsam abbaut, genügen relativ kurz Stromimpulse, um diese Verluste in der anschließenden Refresh-Phase wieder auszugleichen. Man erhält so ein flackerfreies Bild mit nahezu konstanter Farbtiefe, für dessen Aufrechterhaltung aber nur ein Bruchteil des Stromes benötigt wird, der bei permanentem Stromfluss anfallen würde.

Spezielle Ausführungsformen der obengenannten Typen 1 und 2 können beispielsweise die folgenden sein, die ebenfalls Gegenstand der Erfindung sind, wenn sie durch eine Schtuzschicht vor UV-Licht geschützt sind, die Nanoteilchen und UV-Absorber enthält.

**Typ 1:** (unverspiegelt)

aus dem Bereich Lichtschutz/Lichtfilter: Fensterscheiben für Gebäude, Straßenfahrzeuge, Flugzeuge, Eisenbahnen, Schiffe, Dachverglasungen, Autosonnendächer, Verglasung von Gewächshäusern und Wintergärten, Lichtfilter beliebiger Art;

aus dem Bereich Sicherheit/Geheimhaltung: Trennscheiben für Raumteiler, beispielsweise in Büros, Straßenfahrzeugen, Flugzeugen, Eisenbahnen, Sichtschutzscheiben, beispielsweise an Bankschaltern, Türverglasungen, Scheiben für Motorrad- oder Pilotenhelme;

aus dem Bereich Design: Verglasung von Backöfen, Mikrowellengeräten, anderen Haushaltsgeräten, Möbeln.

Aus dem Bereich Anzeigen: analoge Spannungsanzeigen, als Batterietester, Tankanzeigen, Temperaturanzeigen, usw.

**Typ 1:** (verspiegelt)

Spiegel jeglicher Art, beispielsweise für Straßenfahrzeuge, Eisenbahnen, insbesondere plane, spärische, asphärische Spiegel und Kombinationen daraus, beispielsweise spärisch/asphärisch, Spiegelverglasung in Möbeln.

**Typ 2:**

Anzeigevorrichtungen jeglicher Art, beispielsweisse Segment- oder Matrixanzeigen, beispielsweise für Uhren, Computer, Elektrogeräte, Elektronikgeräte wie Radios, Verstärker, Fernseher, CD-Player, Zielanzeige in Bussen und Zügen, Abfahrts- oder Abfluganzeigen in Bahnhöfen und Flughäfen, Flachbildschirme, alle Anwendungen, die unter Typ 1 und 2 genannt sind, die mindestens eine schaltbare, statische oder variable Anzeigevorrichtung enthalten, beispielsweise Trennscheiben, die Anzeigen wie "Bitte nicht stören", "Schalter nicht besetzt" enthalten, beispielsweise Auto-Spiegel, die Anzeigen beliebiger Art enthalten, wie Anzeige der Temperatur, Störungen im Fahrzeug, beispielsweise Öltemperatur, offene Türen, Zeit, Himmelsrichtung.

## Patentansprüche

1. Elektrochrome Vorrichtung, bestehend aus einem Paar Glas- oder Kunststoffplatten oder Kunststoffolien, von denen mindestens eine Platte oder Folie, vorzugsweise beide Platten oder Folien auf jeweils einer Seite mit einer elektrisch leitfähigen Beschichtung versehen sind, von denen wenigstens eine Platte oder Folie und ihre leitfähige Beschichtung transparent sind, von denen die andere verspiegelt sein kann und von denen wenigstens bei einer der beiden Platten oder Folien die elektrisch leitfähige Schicht in getrennte, einzeln kontaktierte Flächensegmente aufgeteilt sein kann, wobei die Platten oder Folien über einen Dichtungsring auf den Seiten ihrer leitfähigen Beschichtung zusammengefügt sind, und das Volumen, gebildet aus den beiden Platten oder Folien und dem Dichtungsring, mit einem elektrochromen Medium gefüllt ist, **dadurch gekennzeichnet, dass** wenigstens eine der beiden Platten oder Folien eine Beschichtung trägt, die mindestens einen UV-Absorber und Nanoteilchen enthält.

2. Elektrochrome Vorrichtung gemäß Anspruch 1, **dadurch gekennzeichnet, dass** die Beschichtung einen organischen UV-Absorber enthält.

3. Elektrochrome Vorrichtung gemäß einem oder mehrerer der Ansprüche 1 bis 2, **dadurch gekennzeichnet, dass** die Beschichtung einen organischen UV-Absorber und anorganische Nanoteilchen enthält.

4. Elektrochrome Vorrichtung gemäß einem oder mehrerer der Ansprüche 1 bis 3, **dadurch gekennzeichnet, dass** die Absorptionskante der Nanoteilchen kürzerwellig liegt als die langwellige Absorptionsflanke des UV-Absorbers liegt.

5. Elektrochrome Vorrichtung gemäß einem oder mehrerer der Ansprüche 1 bis 4, **dadurch gekennzeichnet, dass** es sich dabei um eine Anzeigevorrichtung handelt.

6. Elektrochrome Vorrichtung gemäß einem oder mehrerer der Ansprüche 1 bis 4, **dadurch gekennzeichnet, dass** es sich dabei um einen Spiegel handelt.

7. Elektrochrome Vorrichtung gemäß einem oder mehrerer der Ansprüche 1 bis 4, **dadurch gekennzeichnet, dass** es sich dabei um ein Fenster handelt.

8. Elektrochrome Vorrichtung gemäß einem oder mehrerer der Ansprüche 1 bis 7, **dadurch gekennzeichnet, dass** die Beschichtung aus einem organischen Polymeren besteht.

9. Elektrochrome Vorrichtung gemäß einem oder mehrerer der Ansprüche 1 bis 8, **dadurch gekennzeichnet, dass** das elektrochrome Medium mindestens ein Paar von Redoxsubstanzen enthält, von denen eine reduzierbar und die andere oxidierbar ist, wobei beide farblos oder nur schwach gefärbt sind und nach Anlegen einer Spannung an die elektrochrome Vorrichtung die eine Substanz reduziert und die andere oxidiert wird, wobei wenigstens eine farbig wird und nach Abschalten der Spannung sich die beiden ursprünglichen Redoxsubstanzen wieder zurückbilden und die elektrochrome Vorrichtung sich entfärbt.

10. Elektrochrome Vorrichtung gemäß Anspruch 9, **dadurch gekennzeichnet dass**

    a) die reduzierbare Substanz mindestens eine, vorzugsweise wenigstens zwei chemisch reversible Reduktionswellen im cyclischen Voltammogramm und die oxidierbare Substanz entsprechend mindestens eine, vorzugsweise wenigstens zwei chemisch reversible Oxidationswellen besitzen, oder

b) die reduzierbare Substanz und die oxidierbare Substanz über eine Brücke B kovalent aneinander gebunden sind, oder

c) als reduzierbare und/oder oxidierbare Substanz solche ausgewählt sind, bei denen der reversible Übergang zwischen der oxidierbaren Form und der reduzierbaren Form oder umgekehrt mit dem Bruch bzw. dem Aufbau einer $\sigma$-Bindung verbunden ist, oder

d) die reduzierbare Substanz und/oder die oxidierbare Substanz Metallsalze oder Metallkomplexe sind von solchen Metallen, die in mindestens zwei Oxidationsstufen existieren, oder

e) die reduzierbare und/oder oxidierbare Substanz Oligo- und Polymere sind, die mindestens eines der genannten Redoxsysteme, aber auch Paare solcher Redoxsysteme, wie sie unter a) bis d) definiert sind, enthalten, oder

f) als reduzierbare und/oder oxidierbare Substanz Mischungen der in a) bis e) beschriebenen Substanzen eingesetzt werden, vorausgesetzt diese Mischungen enthalten mindestens ein reduzierbares und mindestens ein oxidierbares Redoxsystem.

**11.** Elektrochrome Vorrichtung gemäß einem oder mehrerer der Ansprüche 1 bis 10, **dadurch gekennzeichnet, dass** als organischer UV-Absorber mindestens einer der Formeln

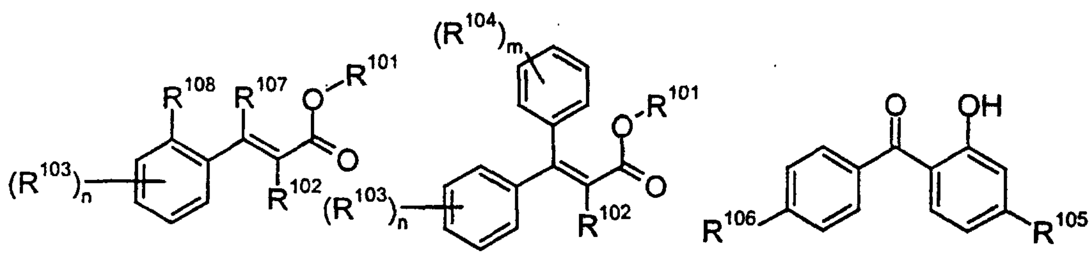

(C), (CI), (CII),

verwendet wird,
worin

| | |
|---|---|
| $R^{101}$ | für gegebenenfalls verzweigtes $C_1$- bis $C_{20}$-Alkyl steht, |
| $R^{102}$ | für Wasserstoff, Cyano oder $COOR^1$ steht, |
| $R^{103}$, $R^{104}$ und $R^{106}$ | unabhängig voneinander für Wasserstoff, $C_1$- bis $C_{12}$-Alkyl oder $C_1$- bis $C_{12}$-Alkoxy stehen, |
| $R^{105}$ | für Wasserstoff, $C_1$- bis $C_{12}$-Alkyl, $C_1$- bis $C_{12}$-Alkoxy oder Hydroxy steht, |
| $R^{107}$ | für Wasserstoff oder $C_1$- bis $C_{12}$-Alkyl steht, |
| $R^{108}$ | für Wasserstoff steht oder |
| $R^{107}$ gemeinsam mit $R^{108}$ | eine $C_2$- oder $C_3$-Brücke bilden, die bis zu 3 $C_1$- bis $C_4$-Alkylreste tragen kann und |
| n und m | unabhängig voneinander für eine ganze Zahl von 1 bis 3 stehen. |

**12.** Elektrochrome Vorrichtung gemäß einem oder mehrerer der Ansprüche 1 bis 9, **dadurch gekennzeichnet, dass** die anorganischen Nanoteilchen solche auf Basis SiC, AlSi, Ag, $Fe_2O_3$, $Fe_3O_4$, $TiO_2$, ZnO, GaP, $CeO_2$, ZnS, $SnO_2$, $Si_yGe_{1-y}$, $W_xMo_{1-x}O_3$, NiO, $Bi_2O_3$, $In_2O_3$, $HfO_2$, $BaTiO_3$, $CaTiO_3$, Ge, AlP, GaN, worin $0{,}7 \leq y < 1$ und $0 \leq x \leq 1$ sind.

## Claims

1. Electrochromic device consisting of a pair of glass or plastic plates or plastic films of which at least one plate or film, preferably both plates or films, are provided on in each case one side with an electrically conductive coating, of which at least one plate or film and its conductive coating is transparent, of which the other may be mirrored, and of which in the case of at least one of the two plates or films the electrically conductive layer can be divided into separate, individually contacted area segments, where the plates or films are joined together via a sealing ring on the sides of their conductive coating, and the volume formed by the two plates or films and the sealing ring is filled with an electrochromic medium, **characterized in that** at least one of the two plates or films carries a coating which comprises at least one UV absorber and nanoparticles.

2. Electrochromic device according to Claim 1, **characterized in that** the coating comprises an organic UV absorber.

3. Electrochromic device according to one or more of Claims 1 to 2, **characterized in that** the coating comprises an organic UV absorber and inorganic nanoparticles.

4. Electrochromic device according to one or more of Claims 1 to 3, **characterized in that** the absorption edge of the nanoparticles is at a shorter wavelength than the long-wave absorption edge of the UV absorber.

5. Electrochromic device according to one or more of Claims 1 to 4, **characterized in that** it is a display device.

6. Electrochromic device according to one or more of Claims 1 to 4, **characterized in that** it is a mirror.

7. Electrochromic device according to one or more of Claims 1 to 4, **characterized in that** it is a window.

8. Electrochromic device according to one or more of Claims 1 to 7, **characterized in that** the coating consists of an organic polymer.

9. Electrochromic device according to one or more of Claims 1 to 8, **characterized in that** the electrochromic medium comprises at least one pair of redox substances, one of which is reducible and the other is oxidizable, both being colourless or only weakly coloured, and, after application of a voltage to the electrochromic device, the first substance is reduced and the other is oxidized, at least one becoming coloured, and, after the voltage is switched off, the two original redox substances are re-formed and the electrochromic device decolorizes.

10. Electrochromic device according to Claim 9, **characterized in that**

    a) the reducible substance has at least one, preferably at least two, chemically reversible reduction waves in the cyclic voltammogram and the oxidizable substance correspondingly has at least one, preferably at least two, chemically reversible oxidation waves, or

    b) the reducible substance and the oxidizable substance are covalently bonded to one another via a bridge B, or

    c) the reducible and/or oxidizable substances selected are those in which the reversible transition between the oxidizable form and the reducible form or vice versa is associated with the breaking or forming of a σ-bond, or

    d) the reducible substance and/or the oxidizable substance are metal salts or metal complexes of metals which exist in at least two oxidation states, or

    e) the reducible and/or oxidizable substances are oligomers and polymers containing at least one of said redox systems, but also pairs of such redox systems as defined under a) to d), or

    f) the reducible and/or oxidizable substances employed are mixtures of the substances described in a) to e), provided that these mixtures contain at least one reducible and at least one oxidizable redox system.

11. The electrochromic device according to one or more of Claims 1 to 10, **characterized in that** the organic UV absorber used is at least one of the formulae

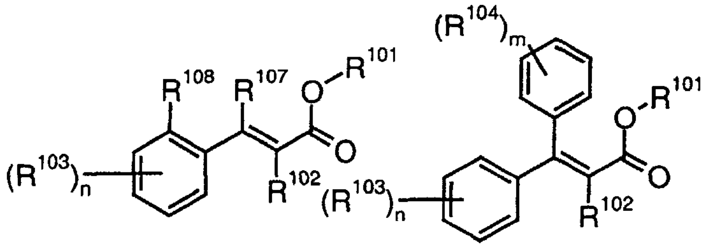

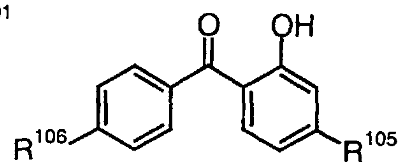

(C), (CI), (CII),

in which

| | |
|---|---|
| $R^{101}$ | is optionally substituted $C_1$- to $C_{20}$-alkyl, |
| $R^{102}$ | is hydrogen, cyano or $COOR^1$, |
| $R^{103}$, $R^{104}$ and $R^{106}$, | independently of one another, are hydrogen, $C_1$- to $C_{12}$-alkyl or $C_1$- to $C_{12}$-alkoxy, |
| $R^{105}$ | is hydrogen, $C_1$- to $C_{12}$-alkyl, $C_1$- to $C_{12}$-alkoxy or hydroxyl, |
| $R^{107}$ | is hydrogen or $C_1$- to $C_{12}$-alkyl, |
| $R^{108}$ | is hydrogen, or |
| $R^{107}$, together with $R^{108}$, | forms a $C_2$- or $C_3$-bridge, which may carry up to 3 $C_1$-to $C_4$-alkyl radicals, and |
| n and m, | xindependently of one another, are an integer from 1 to 3. |

12. Electrochromic device according to one or more of Claims 1 to 9, **characterized in that** the inorganic nanoparticles are those based on SiC, AlSi, Ag, $Fe_2O_3$, $Fe_3O_4$, $TiO_2$, ZnO, GaP, $CeO_2$, ZnS, $SnO_2$, $Si_yGe_{1-y}$, $W_xMo_{1-x}O_3$, NiO, $Bi_2O_3$, $In_2O_3$, $HfO_2$, $BaTiO_3$, $CaTiO_3$, Ge, AlP, GaN, in which $0.7 \leq y < 1$ and $0 \leq x \leq 1$.

## Revendications

1. Dispositif électrochrome constitué par une paire de plaques de verre ou de matières synthétiques ou encore de feuilles en matières synthétiques, au moins une plaque ou au moins une feuille, de préférence les deux plaques ou les deux feuilles étant munies, respectivement d'un côté, d'une enduction électroconductrice, au moins une plaque ou au moins une feuille et son enduction conductrice étant transparente, l'autre plaque ou l'autre feuille pouvant présenter une couche réfléchissante, et la couche électroconductrice, dans au moins une des deux plaques ou une des deux feuilles, pouvant être subdivisée en fragments de surface séparés établissant individuellement un contact, dans lequel les plaques ou les feuilles sont jointes l'une à l'autre via un anneau d'étanchéisation sur les côtés de leur enduction conductrice, et le volume, formé à partir des deux plaques ou des deux feuilles et à partir de l'anneau d'étanchéisation, est rempli avec un milieu électrochrome, **caractérisé en ce qu'**au moins une des deux plaques ou une des deux feuilles porte une enduction qui contient au moins un absorbeur ultraviolet et des nanoparticules.

2. Dispositif électrochrome selon la revendication 1, **caractérisé en ce que** l'enduction contient un absorbeur ultraviolet de type organique.

3. Dispositif électrochrome selon une ou plusieurs des revendications 1 à 2, **caractérisé en ce que** l'enduction contient un absorbeur ultraviolet organique et des nanoparticules inorganiques.

4. Dispositif électrochrome selon une ou plusieurs des revendications 1 à 3, **caractérisé en ce que** l'arête d'absorption des nanoparticules se trouve dans une gamme de longueurs d'ondes plus courtes que l'arête d'absorption de grande longueur d'onde de l'absorbeur ultraviolet.

**5.** Dispositif électrochrome selon une ou plusieurs des revendications 1 à 4, **caractérisé en ce qu'**il s'agit en l'occurrence d'un dispositif d'affichage.

**6.** Dispositif électrochrome selon une ou plusieurs des revendications 1 à 4, **caractérisé en ce qu'**il s'agit en l'occurrence d'un miroir.

**7.** Dispositif électrochrome selon une ou plusieurs des revendications 1 à 4, **caractérisé en ce qu'**il s'agit en l'occurrence d'une fenêtre.

**8.** Dispositif électrochrome selon une ou plusieurs des revendications 1 à 7, **caractérisé en ce que** l'enduction est constituée d'un polymère organique.

**9.** Dispositif électrochrome selon une ou plusieurs des revendications 1 à 8, **caractérisé en ce que** le milieu électrochrome contient au moins une paire de substances rédox dont l'une peut être réduite et l'autre peut être oxydée, les deux substances étant incolores ou seulement légèrement colorées, dans lequel, après application d'une tension sur le dispositif électrochrome, une substance est soumise à une réduction et l'autre est soumise à une oxydation, dans lequel au moins une substance se colore, et après interruption de la tension, les deux substances rédox initiales se reforment et la couleur du dispositif électrochrome disparaît.

**10.** Dispositif électrochrome selon la revendication 9, **caractérisé en ce que**

a) la substance apte à être réduite possède au moins une onde de réduction, de préférence au moins deux ondes de réduction réversibles par voie chimique dans le voltamogramme cyclique et la substance apte à être oxydée possède de manière correspondante au moins une onde d'oxydation, de préférence au moins deux ondes d'oxydation réversibles par voie chimique, ou bien

b) la substance apte à être réduite et la substance apte à être oxydée sont reliées l'une à l'autre de manière covalente via un pont B, ou bien

c) à titre de substance apte à être réduite et/ou de substance apte à être oxydée, on choisit des substances dans lesquelles la transition réversible entre la forme apte à être oxydée et la forme apte à être réduite ou inversement est liée à la rupture respectivement à l'élaboration d'une liaison $\sigma$, ou bien

d) la substance apte à être réduite et/ou la substance apte à être oxydée sont des sels métalliques ou des complexes métalliques de métaux qui existent dans au moins deux étages d'oxydation, ou bien

e) la substance apte à être réduite et/ou la substance apte à être oxydée sont des oligomères et des polymères qui contiennent au moins un des systèmes rédox mentionnés, mais également des paires des systèmes rédox tels qu'ils sont définis sous a) à d), ou bien

f) à titre de substance apte à être réduite et/ou de substance apte à être oxydée, on met en oeuvre des mélanges des substances décrites dans a) à e), à condition que ces mélanges contiennent au moins un système rédox apte à être réduit et au moins un système rédox apte à être oxydé.

**11.** Dispositif électrochrome selon une ou plusieurs des revendications 1 à 10, **caractérisé en ce qu'**on utilise, à titre d'absorbeur ultraviolet organique au moins un absorbeur répondant à une des formules

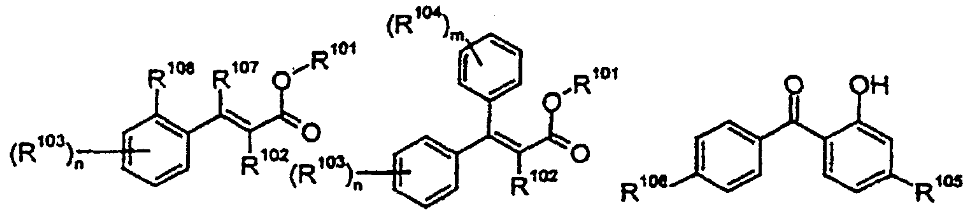

(C), (CI), (CII),

dans lesquelles

| | |
|---|---|
| $R^{101}$ | représente un groupe alkyle en $C_1$-$C_{20}$ le cas échéant ramifié, |
| $R^{102}$ | représente un atome d'hydrogène, un groupe cyano ou encore un groupe $COOR^1$, |
| $R^{103}$, $R^{104}$ et $R^{106}$ | représentent, indépendamment l'un de l'autre, un atome d'hydrogène, un groupe alkyle en $C_1$-$C_{12}$ ou un groupe alcoxy en $C_1$-$C_{12}$, |
| $R^{105}$ | représente un atome d'hydrogène, un groupe alkyle en $C_1$-$C_{12}$, un groupe alcoxy en $C_1$-$C_{12}$ ou un groupe hydroxyle, |
| $R^{107}$ | représente un atome d'hydrogène ou un groupe alkyle en $C_1$-$C_{12}$, |
| $R^{108}$ | représente un atome d'hydrogène ou bien |
| $R^{107}$ | de manière conjointe avec $R^{108}$ forment un pont en $C_2$ ou en $C_3$ qui peut porter jusqu'à 3 radicaux alkyle en $C_1$-$C_4$, et |
| n et m | représentent, indépendamment l'un de l'autre, un nombre entier de 1 à 3. |

**12.** Dispositif électrochrome selon une ou plusieurs des revendications 1 à 9, **caractérisé en ce que** les nanoparticules inorganiques sont des nanoparticules à base de SiC, AlSi, Ag, $Fe_2O_3$, $Fe_3O_4$, $TiO_2$, ZnO, GaP, $CeO_2$, ZnS, $SnO_2$, $Si_yGe_{1-y}$, $W_xMo_{1-x}O_3$, NiO, $Bi_2O_3$, $In_2O_3$, $HfO_2$, $BaTiO_3$, $CaTiO_3$, Ge, AlP, GaN, où $0,7 \leq y < 1$ et $0 \leq x \leq 1$.